# EUROPEAN PATENT APPLICATION

(11) **EP 4 123 525 A1**
(43) Date of publication of application: **25.01.2023**
(21) Application number: 21792990.0
(22) Date of filing: 04.03.2021
(51) Int. Cl.: G06Q 10/04, G06Q 10/10

(54) **RECOMMENDATION SYSTEM AND RECOMMENDATION METHOD**

(30) Priority: 22.04.2020 JP 2020076289
(71) Applicant: Hitachi, Ltd., Tokyo 100-8280 (JP)
(72) Inventor: YANO, Kojin, Tokyo 100-8280 (JP); SUZUKI, Kei, Tokyo 100-8280 (JP); EBATA, Tomoichi, Tokyo 100-8280 (JP); HORI, Satoru, Tokyo 100-8280 (JP)
(74) Representative: Manitz Finsterwald Patent- und Rechtsanwaltspartnerschaft mbB
(86) International application number: PCT/JP2021/008501
(87) International publication number: WO 2021/215127

(57) **Abstract**

Disclosed is a recommendation system 1 that includes a recommendation server 10. The recommendation server 10 includes a communication device and an arithmetic device. The communication device communicates with terminals 11 and 12 through a network 5. The arithmetic device distributes meeting candidate information including meeting conditions for holding a meeting to the terminals 12 of meeting participants, receives, from the terminals 12, information on disutility that is inflicted on the meeting participants by the meeting conditions, searches the places indicated by the meeting candidate information according to a disutility value for the meeting conditions and a disutility variation value per unit change in the meeting conditions in order to retrieve a meeting place that relatively reduces the disutility inflicted on all the meeting participants, and outputs the retrieved meeting place to the terminals 11 and 12. The disutility value and the disutility variation value are indicated by the information on disutility.

## Description

### Technical Field

The present invention relates to a recommendation system and a recommendation method.

### Background Art

When people organize their social lives, it is inevitable for the people to interact and collaborate with others. Recently, when interacting with others, people may hold an online conference or a telephone conference, in some cases. However, when discussing an important matter, people often hold a face-to-face conference. Therefore, it is still important to hold a face-to-face meeting.

Meanwhile, there is an increasing movement toward what is generally called "work style reform," which aims to improve work-life balance and increase labor productivity. When attempting to balance work and private life from a viewpoint of such work-life balance, it is necessary to properly adjust between work and private life in a daily schedule.

Further, from a viewpoint of labor productivity, attention is paid to reduce wasted time. One of typical examples of wasted time is travel time spent for meeting.

At present, a place where some participants belong or a place intermediate between the participants is empirically selected when a meeting place is determined. In this case, however, it is not clear whether the selected meeting place is a place that requires a short travel time for each of the participants.

The above-described problems concerning the minimization of travel time have been long known. For example, the following concept exists. Specifically, there is proposed a method of deriving a meeting location for a plurality of meeting participants (refer to Patent Document 1). The method includes the steps of identifying travel circumstances of each of the meeting participants, and selecting a set of candidate meeting places on the basis of a plurality of initial criteria such that fair travel load for traveling to each of the candidate meeting places is imposed on all the meeting participants. At least one of the initial criteria has a value that is identified for a corresponding one of the meeting participants by using at least information extracted from the travel circumstances.

Patent Document 1 described above states that a geospatial intermediate point does not serve as a fair intermediate point for all the meeting participants because the meeting participants travel on foot, by car, by public transport, or by various other travel means, and thus presents a method of estimating a fairer meeting place.

There is also proposed an information processing device (refer to Patent Document 2). The information processing device includes a relationship estimation section and an action planning section. The relationship estimation section estimates the relationship among a plurality of users according to sensing data. The action planning section creates action plans of the plurality of users according to the result of the above estimation.

Patent Document 2 described above presents means of recommending an action common to the actions of the users according to a schedule of each of the users without regard to a meeting place. This solves problems related to a wait place and a meeting place.

### Prior Art Document

### Patent Documents

Patent Document 1: JP-2010-537342-T
Patent Document 2: WO 2019/049491

### Summary of the Invention

### Problems to be Solved by the Invention

It has conventionally been assumed that all action plans are disclosed or shared among the meeting participants. In some cases, for example, the lodgings or daily schedules of the meeting participants have been assumed to be inputted.

However, due to increased privacy awareness, it is now becoming difficult to compel the meeting participants to disclose and share information on each of the meeting participants. Particularly, there is a strong tendency to avoid wide disclosure of private plans for adjusting a meeting schedule.

Further, opportunities for various service providers, instead of fixed companies, to collaborate with each other, depending on a situation have also been increasing. In such a case, the meeting participants are persons who belong to different organizations. Therefore, when the action plans of the meeting participants are made to public to each other, sensitive sales information or the like may be leaked to other organizations.

In any case, when each of the above-described problems is, for example, replaced by an optimization problem to cause an information processing device to calculate its solution, constraints during computation may exponentially expand with an increase in the number of meeting participants and with an increase in the variety of organizations where the meeting participants belong. This may cause a situation where a proper solution is not obtained within a practical length of time.

In view of the above circumstances, an object of the present invention is to provide a technology that makes it possible to quickly and efficiently calculate a meeting place suitable for all meeting participants while respecting the privacy of each of the meeting participants.

### Means for Solving the Problems

In order to solve the above problems, according to an aspect of the present invention, there is provided a recommendation system including a communication device that communicates with terminals through a network, and an arithmetic device that performs a process of distributing, to the terminals of meeting participants through the communication device, meeting candidate information including meeting conditions indicative of time and place for holding a meeting, a process of receiving, from the terminals, information on disutility that is inflicted on the meeting participants by the meeting conditions indicated by the meeting candidate information, and a process of searching the places indicated by the meeting candidate information according to a disutility value for the meeting conditions and a disutility variation value per unit change in the meeting conditions in order to retrieve a meeting place that relatively reduces the disutility inflicted on all the meeting participants, and outputting the retrieved meeting place to the terminals, the disutility value and the disutility variation value being indicated by the information on disutility.

Further, according to another aspect of the present invention, there is provided a recommendation method that is adopted by an information processing system including a communication device configured to communicate with terminals through a network. The recommendation method includes performing a process of distributing, to the terminals of meeting participants through the communication device, meeting candidate information including meeting conditions indicative of time and place for holding a meeting, performing a process of receiving, from the terminals, information on disutility that is inflicted on the meeting participants by the meeting conditions indicated by the meeting candidate information, and performing a process of searching the places indicated by the meeting candidate information according to a disutility value for the meeting conditions and a disutility variation value per unit change in the meeting conditions in order to retrieve a meeting place that relatively reduces the disutility inflicted on all the meeting participants, and outputting the retrieved meeting place to the terminals, the disutility value and the disutility variation value being indicated by the information on disutility.

### Advantages of the Invention

The present invention makes it possible to quickly and efficiently calculate a meeting place suitable for all meeting participants while respecting the privacy of each of the meeting participants.

### Brief Description of the Drawings

FIG. 1 is a diagram illustrating an overall configuration of a recommendation system according to an embodiment of the present invention.
FIG. 2 is a diagram illustrating an example hardware configuration of an information processing device according to the embodiment.
FIG. 3 illustrates a processing procedure for initial setup according to the embodiment.
FIG. 4 is a diagram illustrating initial information according to the embodiment.
FIG. 5 is a diagram illustrating meeting information according to the embodiment.
FIG. 6 is a diagram illustrating a processing procedure for participant registration according to the embodiment.
FIG. 7 is a diagram illustrating a meeting guide according to the embodiment.
FIG. 8 is a diagram illustrating access information according to the embodiment.
FIG. 9 is a diagram illustrating a processing procedure for adjustment according to the embodiment.
FIG. 10 is a diagram illustrating participation information according to the embodiment.
FIG. 11 is a diagram illustrating conference candidate information according to the embodiment.
FIG. 12 is a diagram illustrating evaluation results according to the embodiment.
FIG. 13 is a diagram illustrating a table for storing the evaluation results according to the embodiment.
FIG. 14 is a diagram illustrating the result of aggregation of the evaluation results according to the embodiment.
FIG. 15 is a diagram illustrating a final plan according to the embodiment.
FIG. 16 is a diagram illustrating a final plan notification according to the embodiment.
FIG. 17 is a diagram illustrating a transportation network according to the embodiment.
FIG. 18 is a diagram illustrating a data structure of the transportation network according to the embodiment.
FIG. 19 is a diagram illustrating a table for storing a meeting place according to the embodiment.
FIG. 20 is a diagram illustrating meeting candidate convergence determination according to the embodiment.
FIG. 21 is a diagram illustrating the transportation network according to the embodiment.
FIG. 22 is a diagram illustrating the transportation network according to the embodiment.
FIG. 23 is a diagram illustrating a disutility evaluation process according to the embodiment.
FIG. 24 is a diagram illustrating a screen for setting a time mismatch disutility function according to the embodiment.
FIG. 25 is a diagram illustrating a screen for setting a cost disutility function according to the embodiment.
FIG. 26 is a diagram illustrating a screen for setting a time disutility function according to the embodiment.
FIG. 27 is a diagram illustrating a method of estimating a disutility function according to the embodiment.
FIG. 28 is a diagram illustrating a scoring method for aggregating certainty of participation according to the embodiment.
FIG. 29 is a diagram illustrating an evaluation confirmation screen according to the embodiment.
FIG. 30 is a diagram illustrating the evaluation confirmation screen according to the embodiment.
FIG. 31 is a diagram illustrating the transportation network according to the embodiment.
FIG. 32 is a diagram illustrating the transportation network according to the embodiment.
FIG. 33 is a diagram illustrating the transportation network according to the embodiment.
FIG. 34 is a diagram illustrating the transportation network according to the embodiment.
FIG. 35 is a diagram illustrating the transportation network according to the embodiment.
FIG. 36 is a diagram illustrating the transportation network according to the embodiment.
FIG. 37 is a diagram illustrating the transportation network according to the embodiment.
FIG. 38 is a diagram illustrating the transportation network according to the embodiment.

### Modes for Carrying Out the Invention

### <<Example System Configuration>>

An embodiment of the present invention will now be described with reference to the accompanying drawings. Component elements designated by the same reference numerals are identical with each other and equivalent in basic configuration and operation.

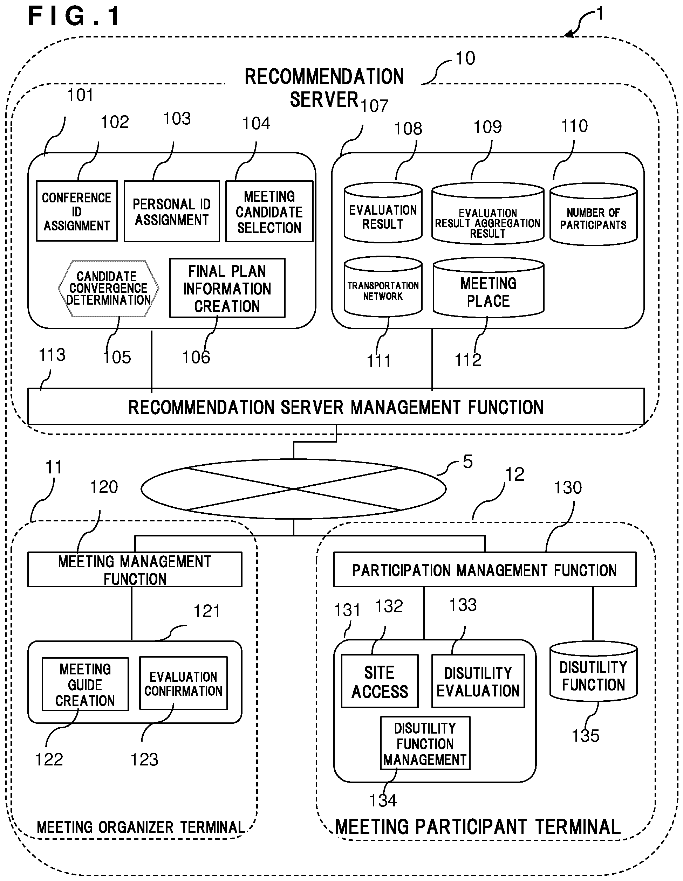

A recommendation system 1 according to the present embodiment is an information processing system that is able to quickly and efficiently calculate a meeting place suitable for each of meeting participants while respecting privacy of each of the meeting participants. As illustrated in FIG. 1, the recommendation system 1 includes a recommendation server 10, a meeting organizer terminal 11, and a meeting participant terminal 12 that are communicatively connected through a network 5.

The recommendation server 10 is a server device that is a main component element of the recommendation system 1 according to the present embodiment and provided with a function for creating a candidate plan of an optimal meeting time and place.

Further, the recommendation server 10 includes a program group 101, data 107, and a recommendation server management function 113.

It is assumed that the program group 101 includes various programs such as a conference ID assignment 102, a personal ID assignment 103, a meeting candidate selection 104, a candidate convergence determination 105, and a final plan information creation 106. The recommendation server 10, which includes a processor, causes the processor to call and execute the above programs as appropriate according to the recommendation server management function 113, and thus implements associated functions. The functions implemented by the individual programs will be described later.

The data 107 has various pieces of data such as an evaluation result 108, an evaluation result aggregation result 109, the number of participants 110, a transportation network 111, and a meeting place 112. According to a request from the recommendation server management function 113, the processor reads the above-mentioned data, appropriately processes the read data, and outputs the processed data to the meeting organizer terminal 11 and the meeting participant terminal 12.

Meanwhile, the meeting organizer terminal 11 is a terminal that enables a meeting organizer to interact with the recommendation server 10. The meeting organizer terminal 11 stores a meeting management function 120 and a program group 121.

The program group 121 includes programs such as a meeting guide creation 122 and an evaluation confirmation 123. The meeting management function 120 performs a function of operating the processor to perform a terminal internal process and operating a bus to exchange information with the outside.

Meanwhile, the meeting participant terminal 12 is a terminal that enables the meeting participant to interact with the recommendation server 10. The meeting participant terminal 12 includes a participation management function 130, a program group 131, and a disutility function 135.

The above-mentioned program group 131 includes programs such as a site access 132, a disutility evaluation 133, and a disutility function management 134. Meanwhile, the participation management function 130 has a function for performing the terminal internal process and operating the bus to exchange information with the outside.

### <<Example Hardware Configuration>>

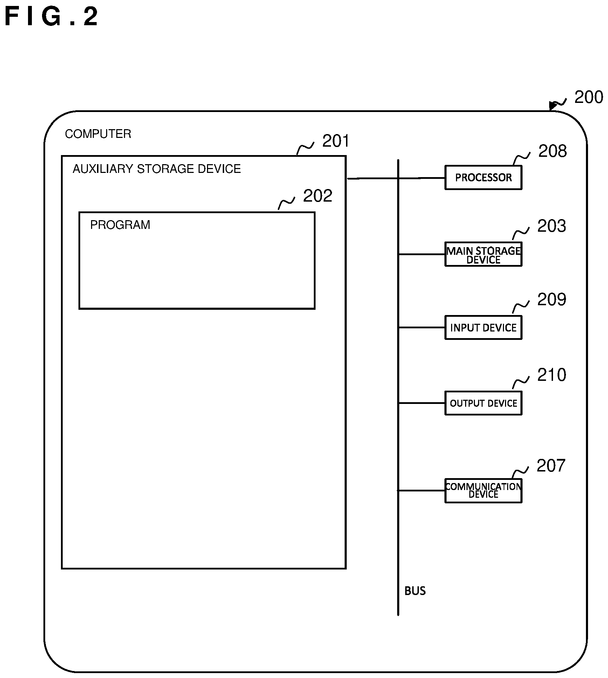

FIG. 2 is a diagram illustrating an example hardware configuration of a computer 200 according to the present embodiment. It is assumed that the computer 200 depicted in FIG. 2 is compatible with each of the recommendation server 10, the meeting organizer terminal 11, and the meeting participant terminal 12.

The computer 200 described above includes an auxiliary storage device 201, a main storage device 203, a processor (arithmetic device) 208, an input device 209, an output device 210, and a communication device 207.

The auxiliary storage device 201 includes an appropriate nonvolatile storage element such as an SSD (Solid State Drive) or a hard disk drive.

The main storage device 203 includes a volatile storage element such as a RAM.

The arithmetic device 208 is a CPU that, for example, reads a program 202 stored in the auxiliary storage device 201, loads the read program 202 into the main storage device 203, and executes the loaded program 202 to provide integrated control of the device and perform various determination, computation, and control processes.

The input device 209 is a keyboard, a mouse, a microphone, or other appropriate device that receives a key input or a voice input from a user.

The output device 210 is an appropriate device such as a speaker or a display for displaying data processed by the arithmetic device 208.

The communication device 207 is a network interface card that is connected to the network 5 to perform a process of communicating with the other devices.

It is assumed that the auxiliary storage device 201 stores at least information required for processing or information obtained from processing in addition to the program 202 which implements functions required of an information processing device included in the recommendation system 1 according to the present embodiment.

### <<Recommendation Method: Initial Setup>>

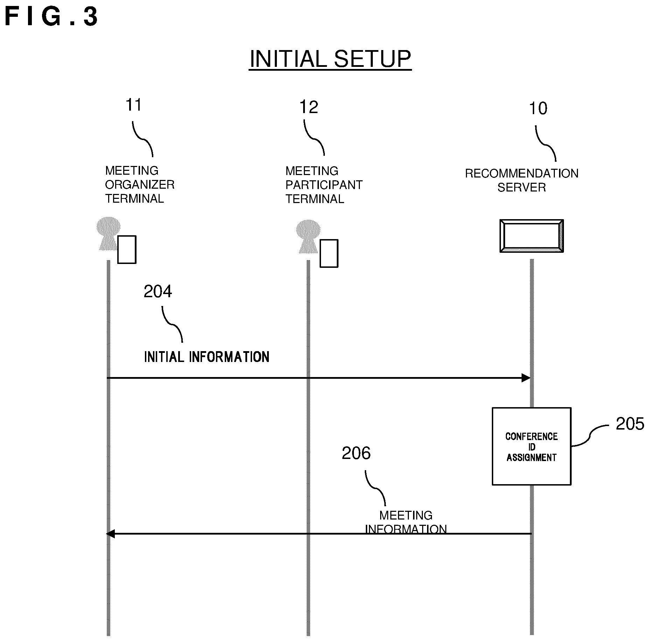

FIG. 3 illustrates a processing procedure for initial setup according to the present embodiment. The following description relates to the interactions between the meeting organizer terminal 11, the meeting participant terminal 12, and the recommendation server 10.

It is assumed that the meeting organizer terminal 11 is allowed to use contact information for each meeting participant (e.g., the mail address of each meeting participant), which is pre-stored in the meeting organizer terminal 11. Further, although FIG. 3 indicates that there is one meeting participant terminal 12, that is, one meeting participant, it is assumed here that one or more meeting participants exist. Furthermore, it is assumed that the meeting organizer intends to adjust a meeting schedule.

In the above circumstance, the meeting organizer terminal 11 transmits initial information 204 to the recommendation server 10. The initial information 204 is inputted to the input device by the meeting organizer.

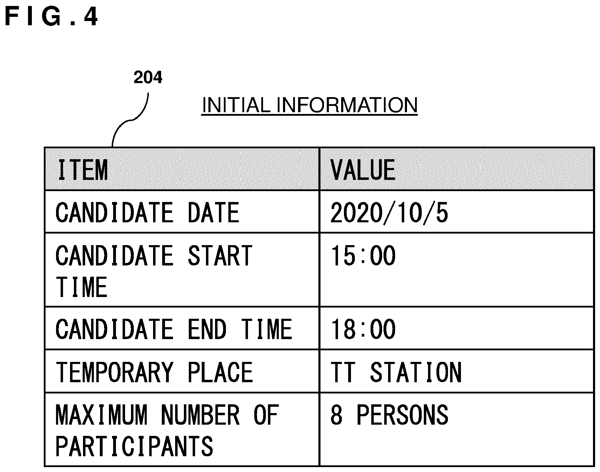

FIG. 4 illustrates data items included in the above-mentioned initial information 204. The data items included in the initial information 204 are, for example, a candidate date, a candidate start time, a candidate end time, a temporary place, and the maximum number of participants. Further, values are set for these data items. All of these are set by the meeting organizer.

In the above initial information transmission, the meeting organizer terminal 11 may transmit the above-described initial information 204 in REST/JSON format through the network 5 to the URL disclosed, for example, by the recommendation server 10. It is obvious that the present invention is not limited to the use of the above-mentioned transmission means. Various interactions between the terminals and the server will be continuously described on the assumption that the same transmission means as mentioned above is used.

Meanwhile, upon receiving the above-described initial information 204, the recommendation server 10 executes the conference ID assignment 205. In this instance, a conference ID for present schedule adjustment is assigned with respect to the meeting organizer. The above conference ID is uniquely assigned so as not to be a duplicate of an ID assigned to another inquiry.

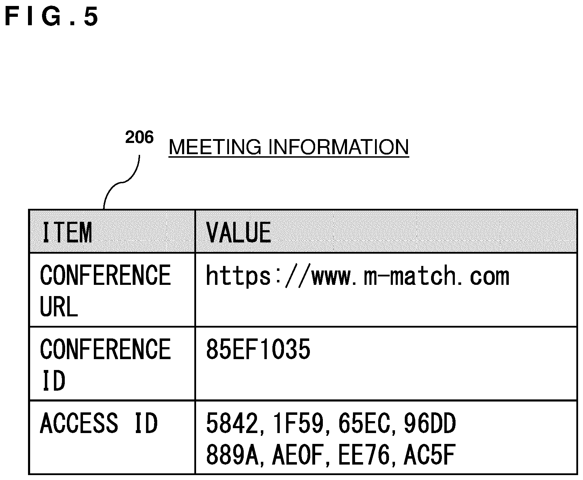

The recommendation server 10 returns the assigned conference ID to the meeting organizer terminal 11 as meeting information 206. FIG. 5 illustrates data items included in the meeting information 206.

The data items included in the meeting information 206 are, for example, a conference URL, a conference ID, and an access ID.

The conference URL and the conference ID are used for present schedule adjustment. The access ID includes an initial ID that allows the meeting participant to access the conference URL.

The above-mentioned access ID is assigned without duplication according to the number of participants indicated in the above-described initial information 204.

The above-mentioned access ID is unique among the conference ID. A combination of the conference ID and the access ID makes it possible to distinguish from the access gained by another meeting organizer and by another meeting participant. This enables the meeting organizer to transmit a schedule adjustment URL and the conference ID to the meeting participant.

### <<Recommendation Method: Participant Registration>>

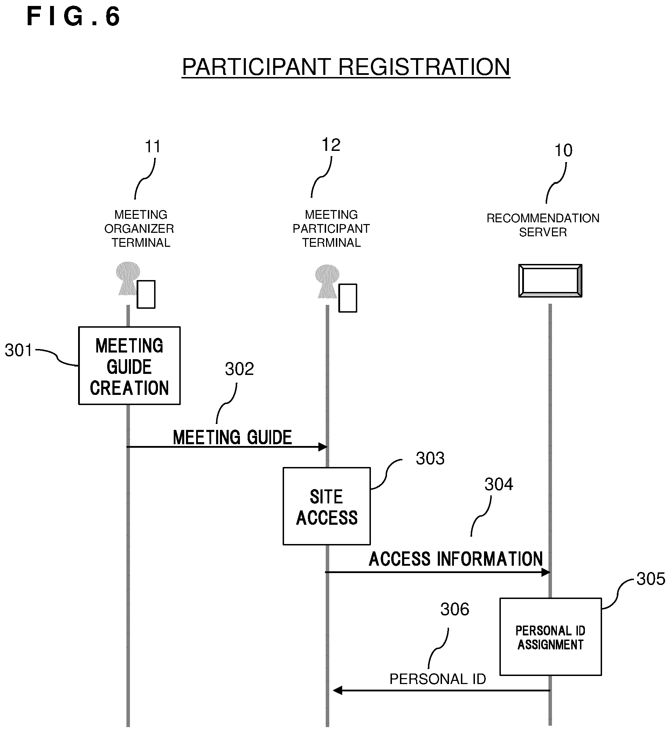

FIG. 6 is a diagram illustrating a processing procedure for participant registration according to the present embodiment. In a case depicted in FIG. 6, the meeting guide creation 301 in the meeting organizer terminal 11 transmits a meeting guide 302 to each meeting participant terminal 12 according to the meeting information 206 received from the recommendation server 10.

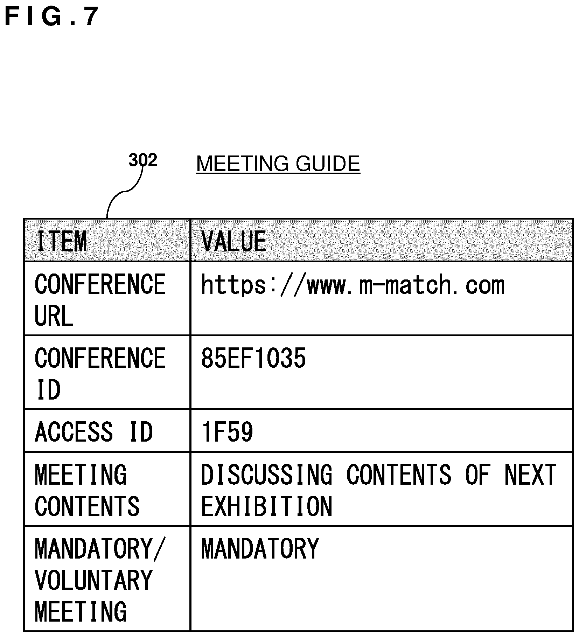

FIG. 7 is a diagram illustrating data items included in the meeting guide 302. The data items included in the meeting guide 302 are, for example, a conference URL, a conference ID, an access ID, meeting contents, and mandatory/voluntary meeting.

Present meeting contents are stored as the meeting contents, which is one of the above data items. Therefore, the meeting participant can determine the degree of importance for the meeting participant by checking the value of the meeting contents.

Also, the mandatory/voluntary meeting, which is another data item, indicates the degree by which the meeting organizer expects the meeting participant to attend. By referencing this data item, the meeting participant can determine whether the meeting participant should preferentially attend.

Meanwhile, the site access 303 of the meeting participant terminal 12 transmits access information 304 to the recommendation server 10 according to the above-mentioned meeting guide 302 received from the meeting organizer terminal 11.

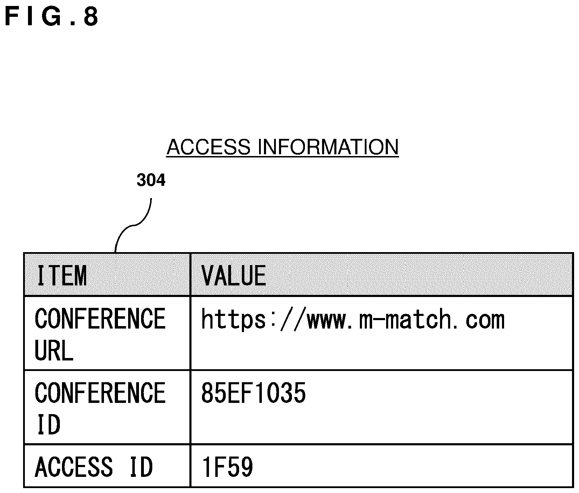

FIG. 8 is a diagram illustrating data items included in the access information 304. The data items included in the access information 304 are, for example, a conference URL, a conference ID, and an access ID. The meeting participant terminal 12 is able to access the recommendation server 10 by using the conference URL, the conference ID, and the access ID which serves as temporary information, as the keys.

Returning now to the description given with reference to FIG. 6, the recommendation server 10 receives the access information 304 from the meeting participant terminal 12, and checks the conference ID and access ID indicated by the received access information 304 to determine whether the present access is now requested from an authentic meeting participant.

The personal ID assignment 305 of the recommendation server 10 assigns a personal ID with respect to the present access and returns the assigned personal ID 306 to the meeting participant terminal 12.

### <<Recommendation Method: Adjustment>>

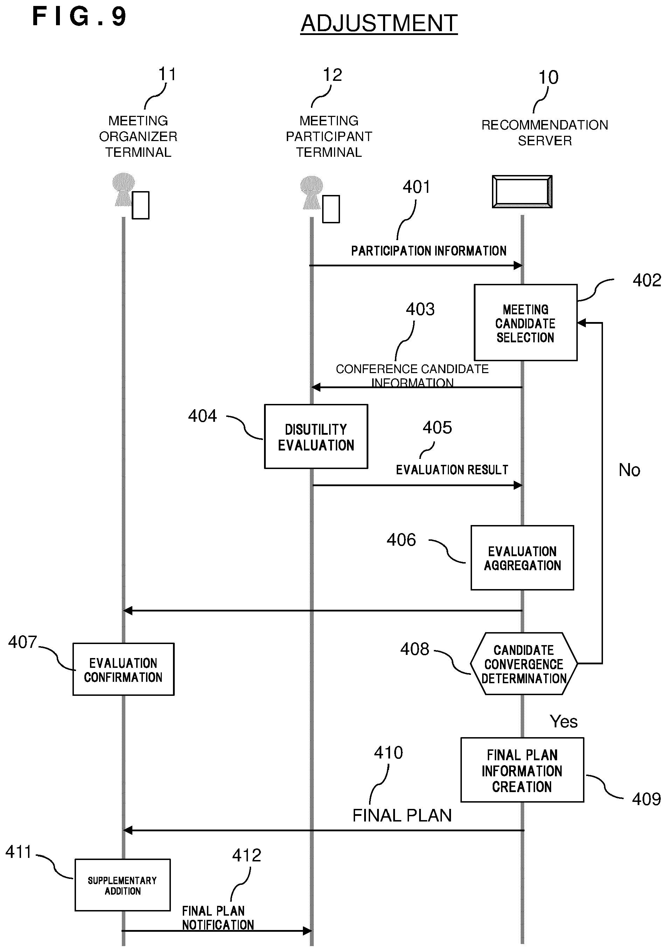

FIG. 9 is a diagram illustrating a processing procedure for adjustment according to the present embodiment. The meeting participant terminal 12 receives the above-mentioned personal ID 306 from the recommendation server 10, and transmits the received personal ID 306 to the recommendation server 10 as participation information 401.

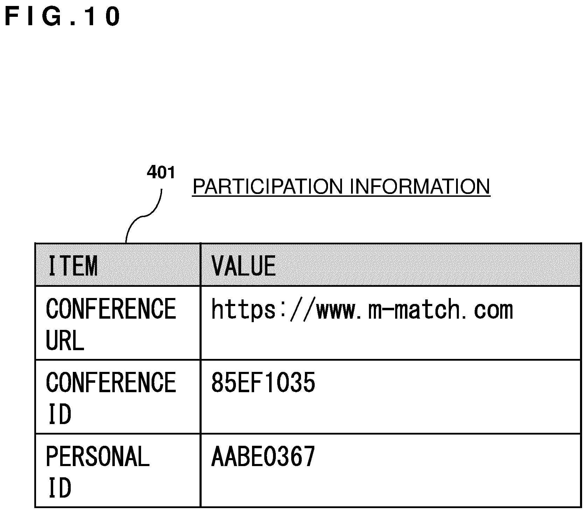

FIG. 10 illustrates data items included in the participation information 401 according to the present embodiment. The data items included in the participation information 401 are, for example, a conference URL, a conference ID, and a personal ID.

The personal ID, which is one of the above data items, is the personal ID 306 assigned at the time of participant registration described earlier. This personal ID enables the recommendation server 10 to verify that access is now requested from an authentic meeting participant.

Subsequently, the recommendation server 10 receives the participation information 401 from all the meeting participant terminals 12, and then executes the meeting candidate selection 402. Regarding the meeting candidates to be selected here, one or more candidates are selected. The recommendation system 1 transmits information on one or more selected candidates to each meeting participant terminal 12 as conference candidate information 403.

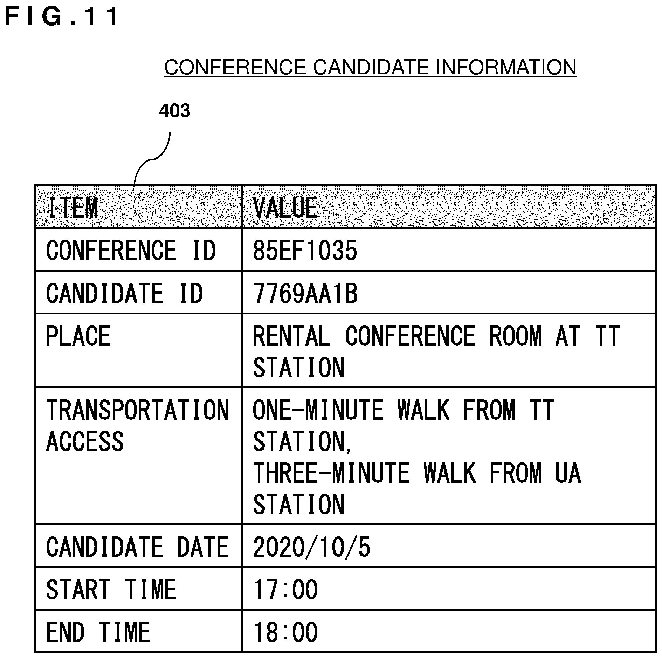

FIG. 11 is a diagram illustrating data items included in the conference candidate information 403. The data items included in the conference candidate information 403 are, for example, a conference ID, a candidate ID, a place, transportation access, a candidate date, a start time, and an end time. The conference candidate information 403 enables the meeting participant terminal 12 to make a utility evaluation.

Returning now to the description given with reference to FIG. 9, the meeting participant terminal 12 of each meeting participant makes a disutility evaluation 403 of each candidate indicated by the above-mentioned conference candidate information 404, and transmits the result of disutility evaluation to the recommendation server 10 as an evaluation result 405.

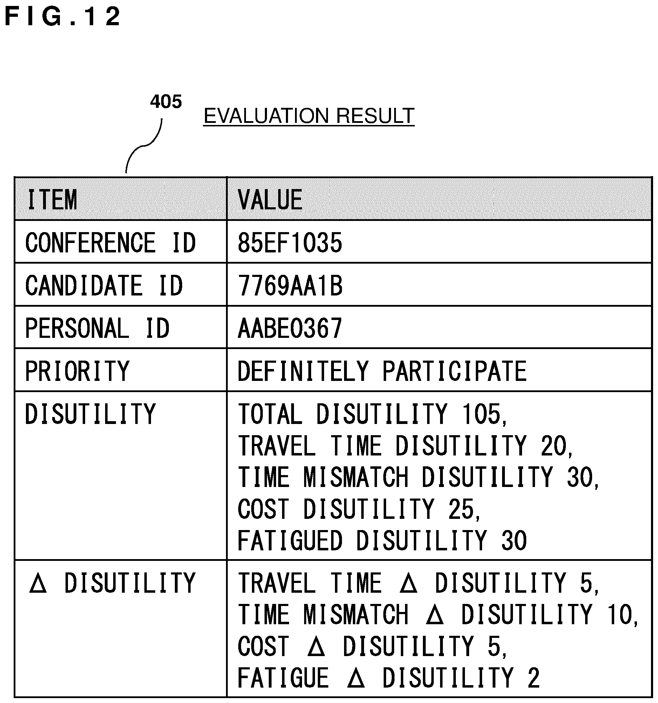

FIG. 12 is a diagram illustrating data items included in the evaluation result 405. The data items included in the evaluation result 405 are, for example, a conference ID, a candidate ID, a personal ID, priority, disutility, and Δ disutility.

The priority, which is one of the above data items, indicates the priority of the meeting participant regarding the present meeting. The method of assigning the priority will be described later.

Meanwhile, the value of the disutility function of the meeting participant for the meeting place is stored as the disutility. Further, the value of disutility variation (a disutility variation value per unit change) caused by a small change in the meeting place is stored as the Δ disutility.

Returning now to the description given with reference to FIG. 6, the recommendation server 10 subsequently performs an evaluation aggregation 406 on the basis of the evaluation result 405 received from each meeting participant terminal 12. The recommendation system 1 transmits the result of the evaluation aggregation 406 to the meeting organizer terminal 11.

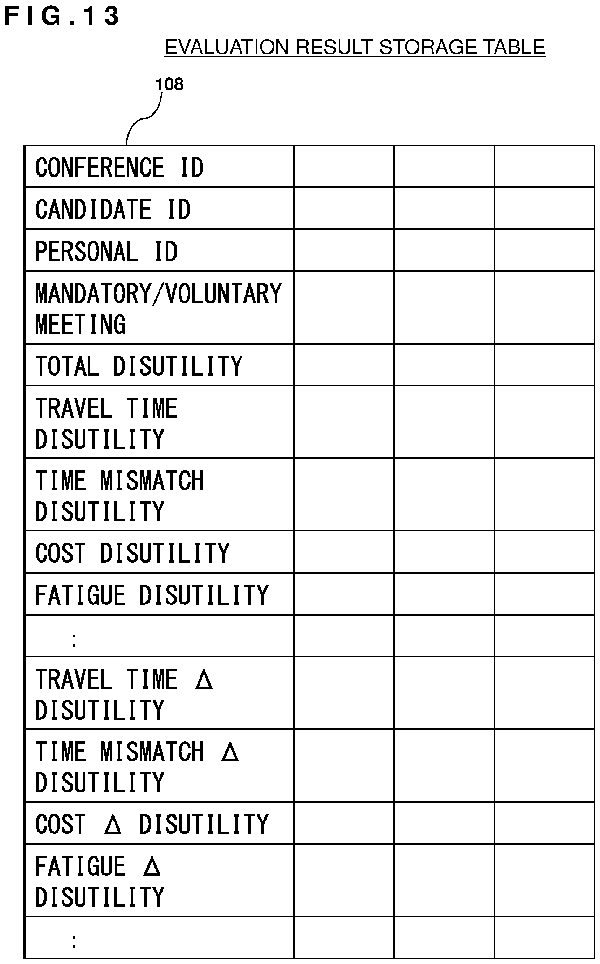

FIG. 13 is a diagram illustrating a configuration of a table 108 that the recommendation server 10 uses to store the evaluation result 405 of each candidate, which is transmitted from each meeting participant terminal 12. The table 108 is formed by using the uniquely assigned conference ID, candidate ID, and personal ID. Therefore, the present table 108 is also an aggregate of records that use the conference ID, the candidate ID, and the personal ID as the search keys and indicate associations between various values, such as a mandatory/voluntary meeting, total disutility, travel time disutility, time mismatch disutility, cost disutility, fatigue disutility, travel time Δ disutility, time mismatch Δ disutility, cost Δ disutility, and fatigue Δ disutility.

In the present embodiment, the evaluation results of a plurality of candidates are required for a plurality of meeting participant terminals 12. Therefore, unique evaluation results are obtained by using the uniquely assigned conference ID, candidate ID, and personal ID. Therefore, the present table 108 also makes it possible to uniquely select the records of the evaluation results by using the conference ID, the candidate ID, and the personal ID as the search keys.

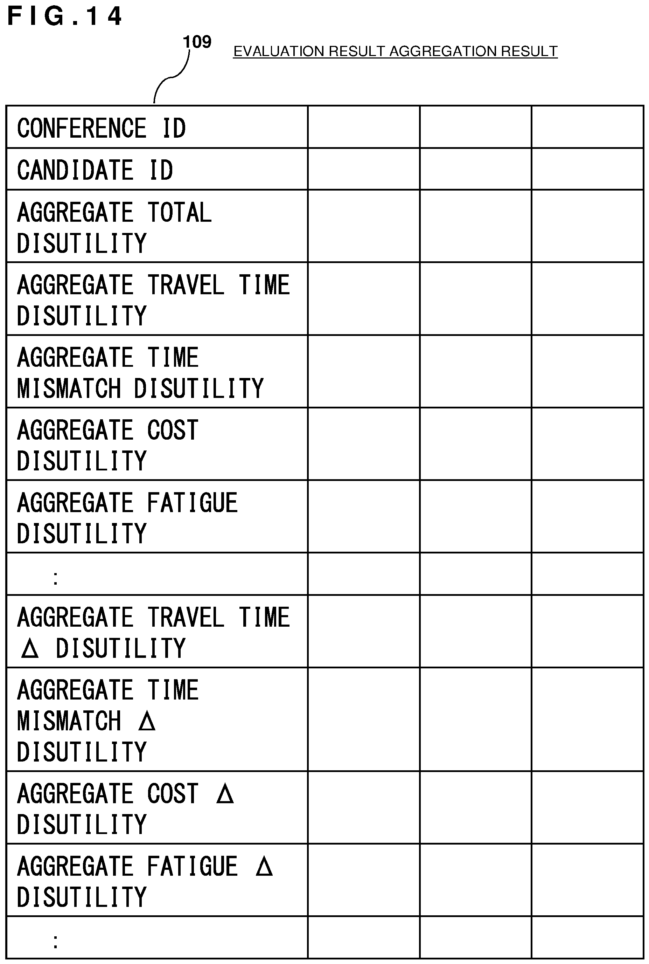

Further, FIG. 14 illustrates a configuration of a table 109 that stores the result of aggregation of the evaluation result 406, that is, the result of the evaluation aggregation 406. The table 109 indicates the result of aggregation of evaluation results received from all the meeting participants. Therefore, the table 109 contains the values of all items included in the table 108 depicted in FIG. 13 except for the item indicating the personal ID.

Returning now to the description given with reference to FIG. 6, the meeting organizer terminal 11 performs the evaluation confirmation 407 to output the above-mentioned result of the evaluation aggregation 406, which indicates the result of evaluation of each candidate, and presents the outputted result of the evaluation aggregation 406 to the meeting organizer for confirmation purposes.

Meanwhile, subsequently to the above-described evaluation aggregation 406, the recommendation server 10 checks for convergence by executing the candidate convergence determination 408 on the basis of the evaluation result 405. If candidate convergence is not achieved, the recommendation server 10 re-executes the meeting candidate selection 402 and continues with processing.

If, in contrast, candidate convergence is achieved, the recommendation server 10 causes the final plan information creation 409 to create information on a final plan 410, and transmits the created information to the meeting organizer terminal 11 as a final plan notification.

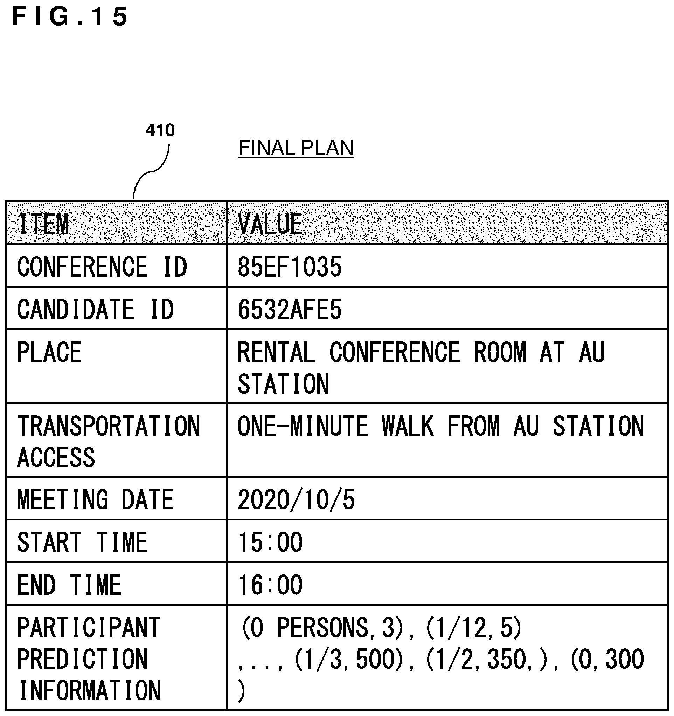

FIG. 15 illustrates a table indicating data items included in the final plan 410. The data items included in the final plan 410 include, for example, a conference ID, a candidate ID, a place, transportation access, a meeting date, a start time, an end time, and participant prediction information. The participant prediction information, which is one of the included data items, will be described later. The meeting organizer terminal 11 obtains the above-described final plan 410, and outputs and presents the obtained final plan 410 to the meeting organizer. In this case, the meeting organizer is able to determine whether the meeting time and place are specified in such a manner as to reduce the travel time required of each of the meeting participants and reduce the labors on all the meeting participants.

Meanwhile, the meeting organizer terminal 11 receives confirmation and an instruction on the above final plan 410 from the meeting organizer, then receives a supplementary input from the meeting organizer regarding the present meeting by using a supplementary addition 411, and transmits the result of such supplementary addition to each meeting organizer terminal 11 as the final plan notification 412.

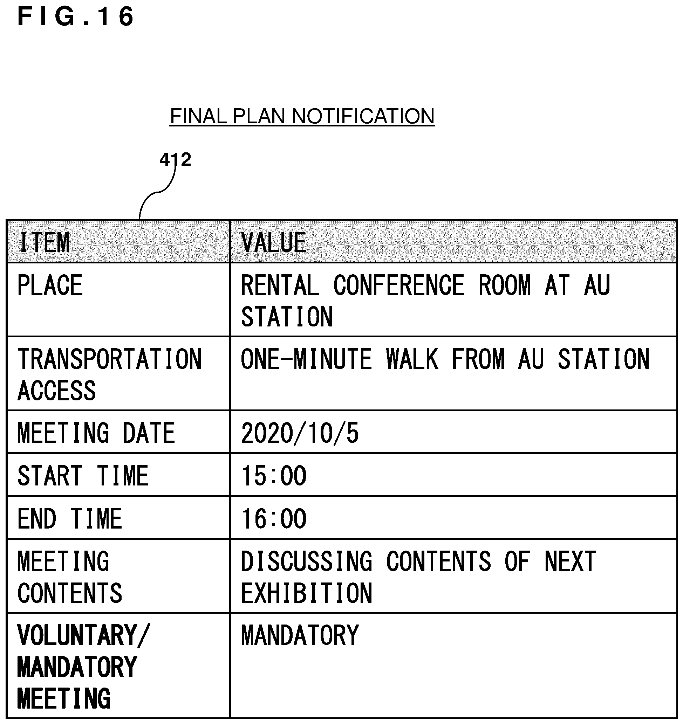

FIG. 16 illustrates data items included in the final plan notification 412. The data items included in the final plan notification 412 include, for example, a meeting place, transportation access, a meeting date, a start time, an end time, meeting contents, and voluntary/mandatory.

### <<Transportation Network, etc. Including Meeting Candidate Places>>

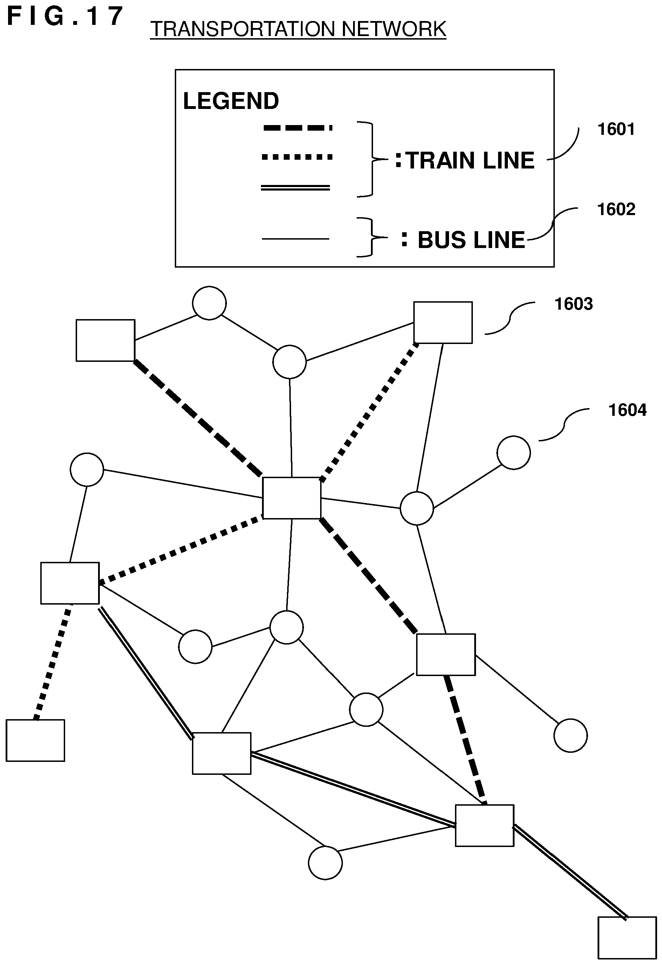

Examples of a transportation network and the like, which are depicted in the sequence diagram of FIG. 9 and will be used to describe the candidate convergence determination 408 in detail, are explained in advance below. FIG. 17 depicts, as an example of the transportation network, train stations and bus stops near a meeting candidate place (e.g., a conference room) and train and bus lines connecting the train stations and the bus stops.

In this transportation network, the train lines 1601 are indicated by thick lines (the line type varies from one line to another), and the bus lines 1602 are indicated by thin lines. Further, rectangular nodes 1603 indicate the train stations, and circular nodes 1604 indicate bus stops.

For ease of understanding, the depicted transportation network includes only two types of transportation means, namely, trains and buses. However, the transportation network may include various other transportation means such as private automobiles and bicycles. In such a case, a transportation network having main points as nodes is to be added; however, processing for various other transportation means can be performed in the similar manner as the processing for the trains and buses.

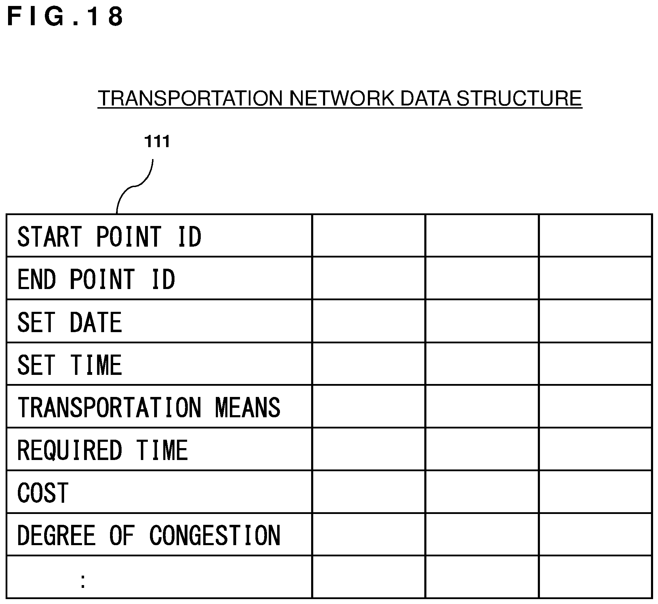

FIG. 18 illustrates the above-described transportation network as a data structure of a table 111. The data structure of the table 111 requires at least data items indicating a start point ID, an end point ID, a set date, a set time, transportation means, a required time, a cost, and a degree of congestion.

The start point ID and the end point ID, which are included as the data items, correspond to each node depicted in FIG. 17, and the set date and the set time respectively indicate a specific date and a specific time. Further, the transportation means indicates the transportation means that are assumed to be used at the set date and time. Furthermore, the disutility when the transportation means is used is included as the disutility caused by the required time, the cost, and the degree of congestion.

By using the above-described data, the meeting participant terminal 12 and the recommendation server 10 search for a route through the use, for example, of a well-known transportation route search service or the like, measure an aggregate disutility along the route, and thus can calculate the disutility between freely selected points.

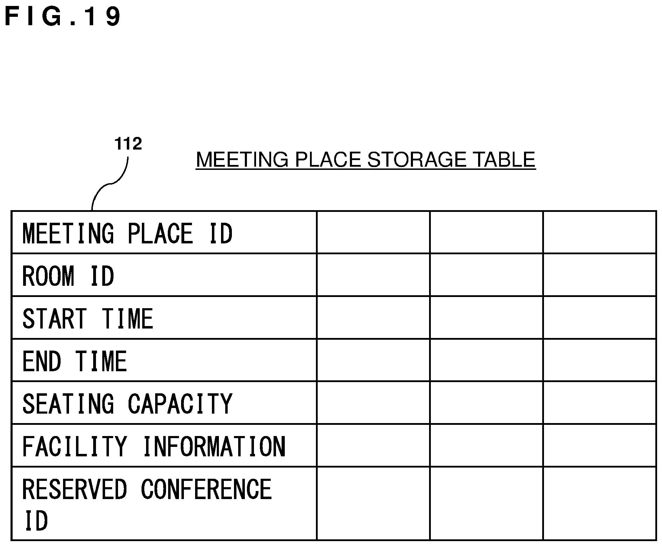

Also, FIG. 19 illustrates a table 112 for storing a meeting place. The data structure of the table 112 requires at least data items such as a meeting place ID, a room ID, a start time, an end time, a seating capacity, facility information, and a reserved conference ID.

The meeting place ID, which is one of the data items in the data structure, corresponds to a node used as the start point ID or the end point ID in the table 111 of the transportation network depicted in FIG. 18. Further, the reserved conference ID indicates a conference ID related to present schedule adjustment. The existence of the conference ID indicates whether or not a reservation is made for the room ID, the start time, and the end time. Moreover, the start time, the end time, the seating capacity, and the facility information make it possible to determine whether the meeting place indicated in the table is a suitable meeting place.

### <<Recommendation Method: Candidate Convergence Determination, etc.>>

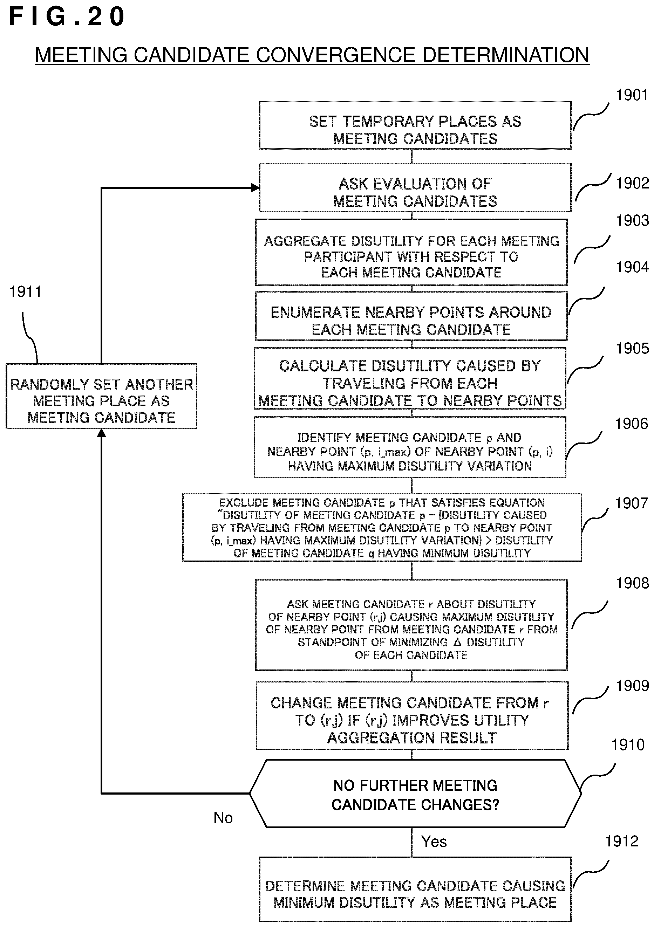

The processing performed in an adjustment sequence illustrated in FIG. 9 will now be described in detail. FIG. 20 illustrates the details of a processing method exercised during a series of processing between the meeting candidate selection 402 and the candidate convergence determination 408 while focusing mainly on the candidate convergence determination 408.

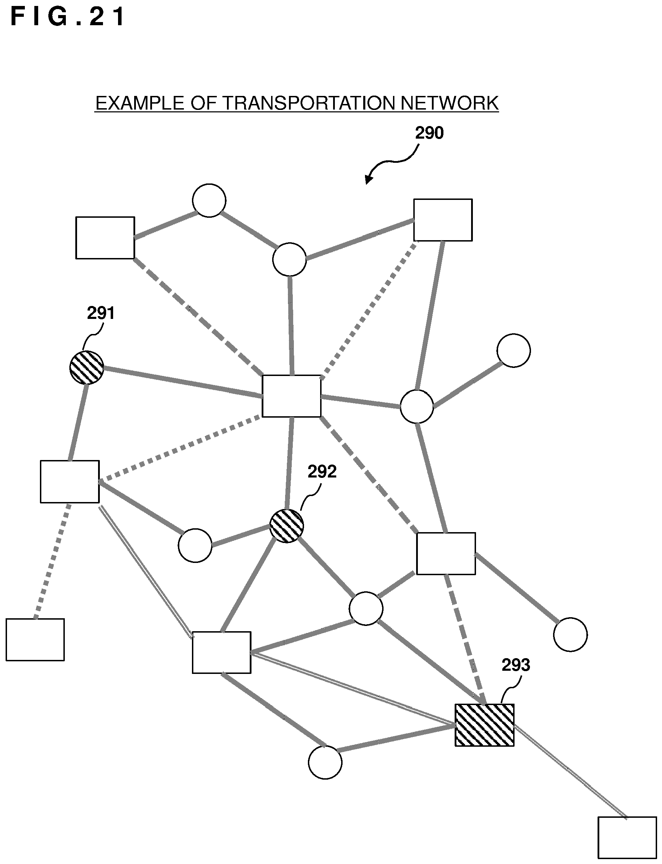

First of all, the recommendation server 10 stores the temporary place, which is indicated by the transmitted initial information 204, in the main storage device 203 as a meeting candidate (1091). There may be a plurality of meeting candidates. Further, the images of the temporary places in the present example, namely, the images of the meeting candidates, are depicted as objects 291 to 293 in an example of the transportation network 290 illustrated in FIG. 21.

Next, the recommendation server 10 asks the meeting participant terminal 12 to evaluate the above meeting candidates 291 to 293 (1902). The recommendation server 10 then acquires the results of evaluation (disutility) from the meeting participant terminal 12, and aggregates the acquired evaluation results (disutility) (1903).

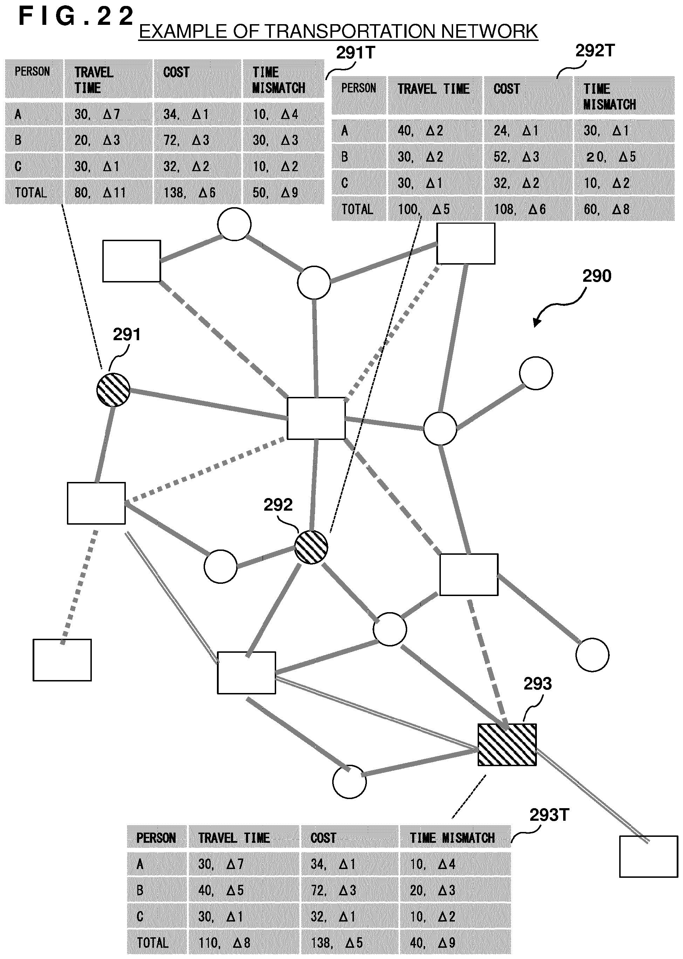

In the example of FIG. 22, the evaluation results, which are regarding the meeting candidates 291 to 293 and acquired from each participant (the meeting participant terminal 12 of each participant), are illustrated as tables 291T, 292T, and 293T. The illustrated evaluation results are the values indicating the travel time for reaching each of the meeting candidates, the cost required for traveling, a time mismatch (the difference from the time expected by a participant) and a utility variation.

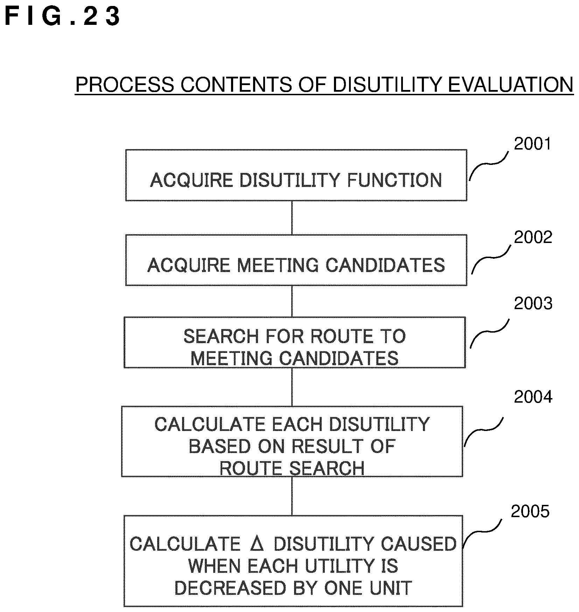

FIG. 23 illustrates the details of processing that is performed by the disutility evaluation 404 at the meeting participant terminal 12. The meeting participant terminal 12 acquires a preretained disutility function (2001). The disutility function will be described later.

Next, the meeting participant terminal 12 acquires the meeting candidates from the conference candidate information 403, which is transmitted from the recommendation server 10 (2002). The meeting participant terminal 12 then searches for a route to each of the meeting candidates (2003).

Further, on the basis of the results of the above route search, the meeting participant terminal 12 calculates the disutility caused by each traveling along each route, and then calculates the disutility of each route by adding up the values of disutility caused by each traveling (2004).

Furthermore, the meeting participant terminal 12 calculates the Δ disutility that is caused when the above route search is subjected to a one-unit change (2005). For example, if the disutility caused by a travel time of 52 minutes is calculated to be 620 and the disutility caused by a travel time of 51 minutes, which is shorter by a preset unit (one minute), is 600, the resulting difference in time is 20. Therefore, the travel time Δ disutility is 20 (it is expected that shortening the travel time by one minute will alleviate the disutility by 20) .

Similarly, the time mismatch Δ disutility caused by a shift in the meeting time, the cost Δ disutility caused by cost reduction, and the fatigue Δ disutility caused by fatigue reduction are to be determined.

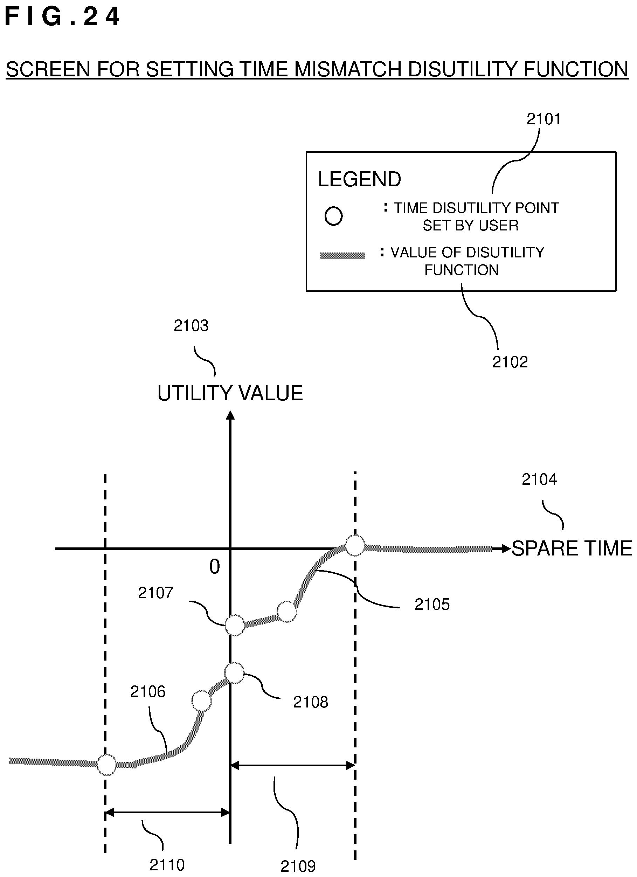

Here, the disutility function indicative of the above disutility will now be described. FIG. 24 illustrates a screen for setting a time mismatch disutility function. The time mismatch disutility function includes circular objects 2101 and thick lines 2102. The circular objects 2101 indicate time disutility points set by a user. The thick lines 2102 connect the individual circular objects 2101. The thick lines 2102 are line segments of a disutility function that estimates a disutility value between the time disutility points.

A vertical axis 2103 represents a utility value, and a horizontal axis 2104 represents a spare time. The meeting participant uses this screen to initially set the spare time 2109. The spare time, which is a time of 0 or longer, indicates a desired free time available before the meeting actually starts after the meeting place is reached. As regards the meeting candidates, it is assumed in the present example that the disutility is 0 when the spare time is equal to or longer than the desired free time, and that disutility occurs when the spare time is shorter than the desired free time.

Further, the meeting participant sets an acceptable overlap time 2110. This setting defines the acceptable degree of disutility that is caused when the meeting participant joins the meeting part way through. When this setting is exceeded (the degree of disutility is unacceptable), the resulting disutility is assumed to be at the lowest level.

Some intermediate points of such disutility can be set as the time disutility points 2101. For example, when the meeting participant holds down a relevant point on the screen of the meeting participant terminal 12, the meeting participant terminal 12 may set a time disutility point. When the meeting participant drags the relevant on-screen point, the meeting participant terminal 12 may perform a process of changing the time disutility point. When the meeting participant presses the relevant on-screen point two times in succession, the meeting participant terminal 12 may delete the time disutility point.

When a time width of 0 is set at continuous time disutility points, the utility becomes discontinuous, which is acceptable. For example, time disutility points 2107 and 2108 are on the axis of the same spare time. Therefore, the disutility between such points is discontinuous and undefined, which is acceptable according to the present invention. In a case where time utility point setup is once completed, a disutility function passing through individual time disutility points is automatically estimated.

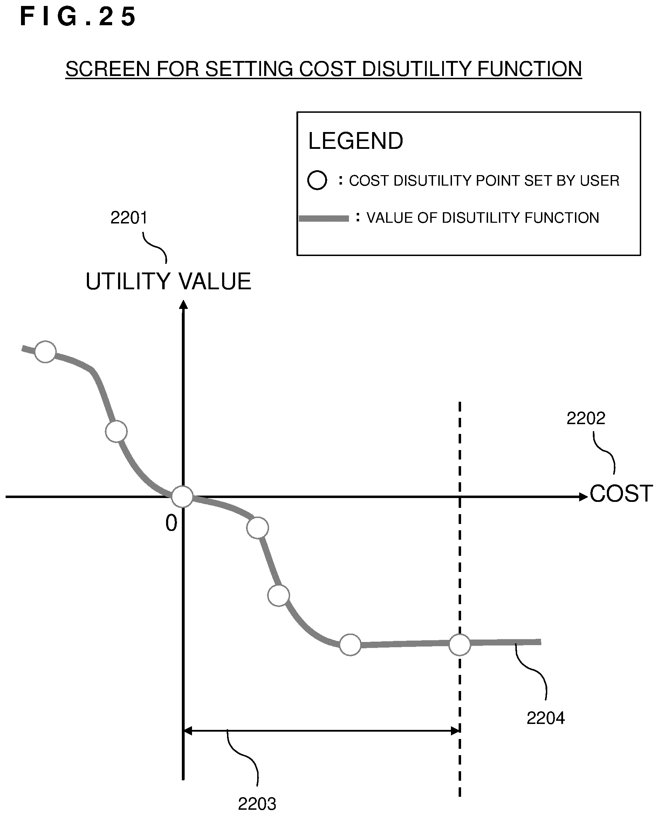

FIG. 25 illustrates a screen for setting a cost disutility function. In this screen, a vertical axis represents a utility value 2201 indicative of disutility, and a horizontal axis represents a cost 2202.

This screen is used to set a tolerance 2203 indicating tolerance for cost. In a case where the tolerance 2203 is exceeded by the cost for a meeting candidate, it is assumed that an intolerable disutility is set.

Further, as regards the cost, a disutility caused by a minus cost is also made settable in consideration of incentive as well. The way of determining the disutility function is not described here because it is the same as the way of determining the time mismatch disutility function explained with reference to FIG. 24. The disutility function estimated in the above manner is a line segment such as a graph 2204.

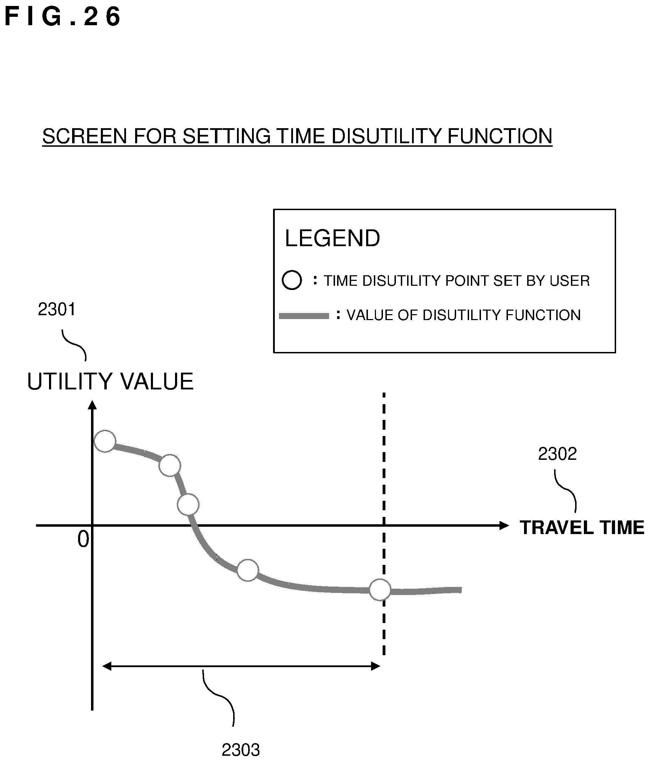

FIG. 26 illustrates a screen for setting a time disutility function. In this screen, a vertical axis represents a disutility 2301, and a horizontal axis represents a travel time 2302.

In a case where the tolerance 2303 is exceeded by the travel time required for the meeting candidate, it is assumed that an intolerable disutility value is set. Since a minus cannot be defined as the travel time, a travel time of 0 or longer is used for modeling the disutility. The method of estimating the disutility function is not described here because it is the same as the method of estimating the time mismatch disutility function explained with reference to FIG. 23.

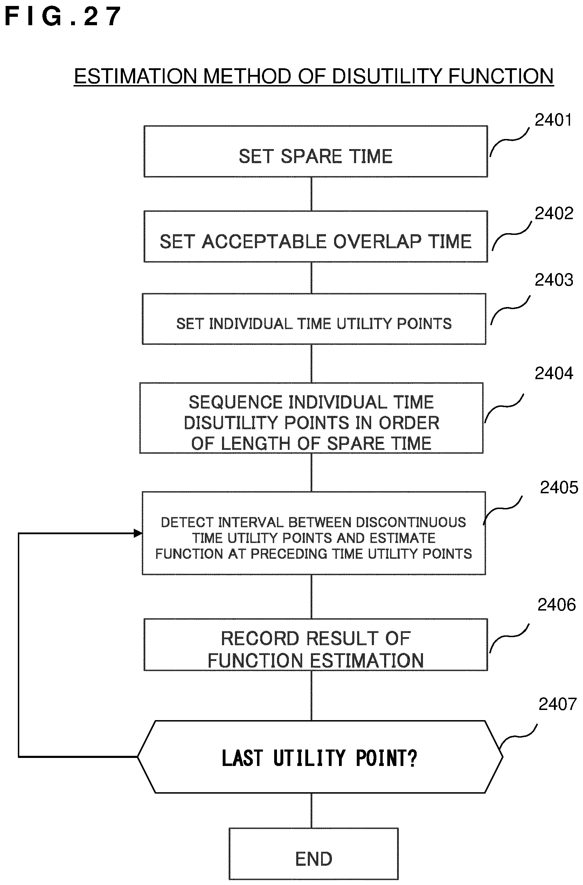

FIG. 27 is a flowchart illustrating a process related to the method of estimating the disutility function, which is described above. Referring to FIG. 27, upon receiving a designation by the meeting participant from the input device, the meeting participant terminal 12 sets the spare time (2401), and then similarly sets the acceptable overlap time (2402).

Next, the meeting participant terminal 12 receives settings of the individual time disutility points from the meeting participant (2403), and sequences the individual time disutility points in order of length of spare time (2404). Further, the meeting participant terminal 12 conducts a search in a direction of increasing spare time from a point where the spare time is shortest (from a minus), detects an interval between discontinuous time disutility points, and estimates the function of the preceding time disutility points (2405).

A number of function estimation methods are applicable. The function can be estimated, for example, by subtracting the value 1 from the degree k of a minimum required function = time disutility points and performing a polynomial approximation (y = a_0 + a_1x + a_2x^2 + a_3x^3 + ? + a_kx^k).

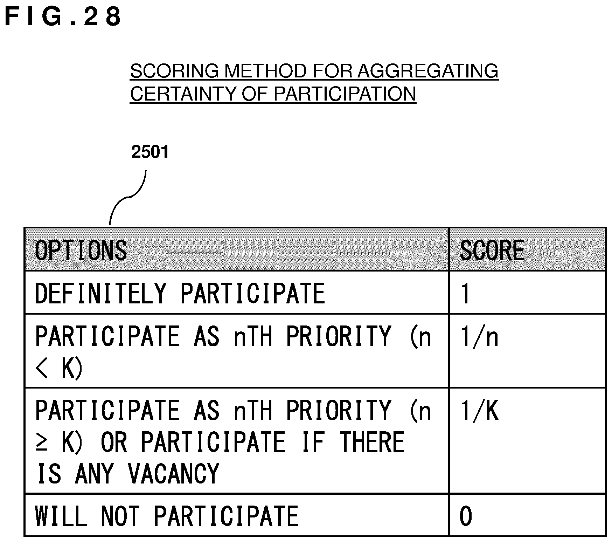

FIG. 28 illustrates a table 2501 indicating a scoring method for aggregating certainty of participation. The left column of the table 2501 indicates options. The example of FIG. 28 offers various evaluation options, namely, "Definitely Participate," "Participate as the nth priority (n < k), "Participate as the nth priority (n ≥ k) or participate if there is any vacancy," and "Will not participate." Score for each option is indicated in the right column.

In the present example, "Definitely Participate" is assumed to be 1, "Will not participate" is assumed to be 0, and "Participate as the nth priority" is assumed to be 1/n, but 1/K if n ≥ k. Further, "participate if there is any vacancy" is assumed to be 1/K.

When the meeting participant terminal 12 finds a schedule conflict from a schedule management held by the meeting participant, prompts the meeting participant to confirm the priority, and performs the above-described scoring operation on the basis of the result of priority confirmation, the expected total number of participants can be estimated later.

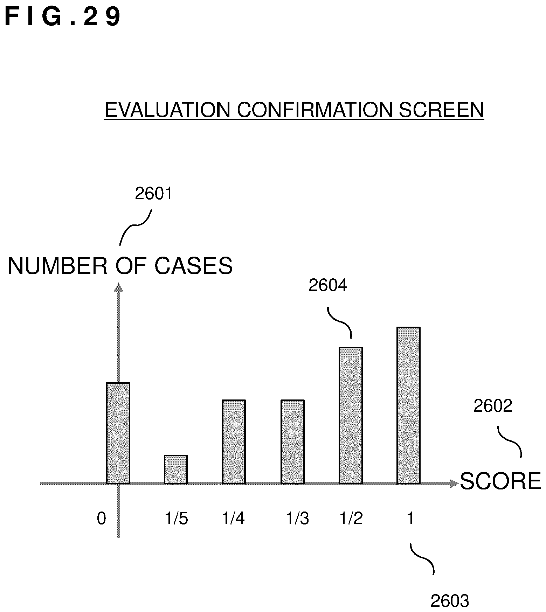

FIG. 29 illustrates the evaluation confirmation 407 that provides confirmation at the meeting organizer terminal 11 at the time of adjustment described with reference to FIG. 9. In the screen of the evaluation confirmation 407, a vertical axis represents the number of cases 2601, and a horizontal axis represents a score 2602. Further, a bar graph 2604 is plotted in association with each score 2603 to indicate the number of cases of each score. This makes it possible to estimate the outline of participation of meeting participants.

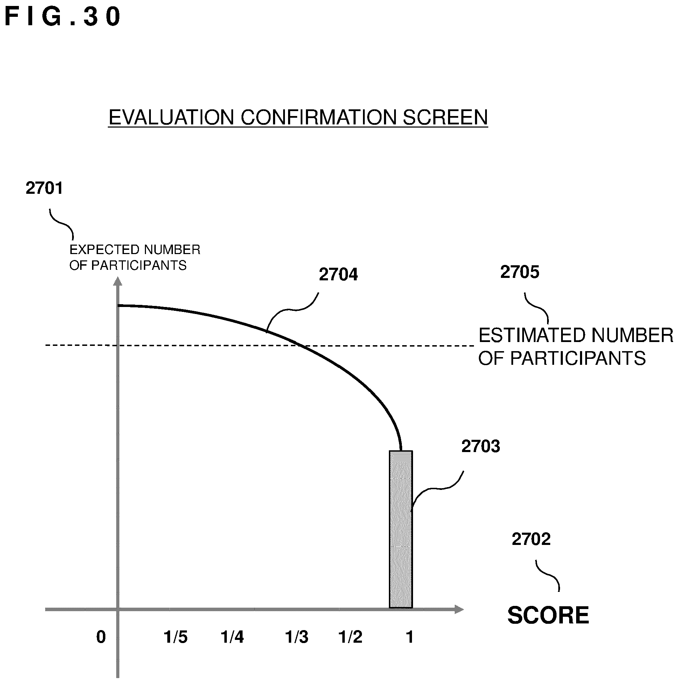

FIG. 30 presents a cumulative graph that is derived from the graphs displayed on the screen of the evaluation confirmation 407 in FIG. 29. Accumulation is done by performing addition leftward beginning with score 1. However, when an addition is made, the value obtained by multiplying a score value by the number of cases is added such that the resulting value comes closer to an expected value.

For example, when the number of cases of score 1/2 is 3, 1/2 * 3 = 1.5 persons are added because there are three participants having priority 2. A vertical axis indicates the expected number of participants 2701, whereas scores 2702 and 2703 on a horizontal axis indicate the number of persons who definitely participate and the expected number of persons 2704 in a case where up to priority i is included.

Further, this cumulative graph depicts a guide indicating the estimated number of participants 2705. The intersection between the guide and the vertical axis is assumed to indicate the expected number of participants. The guide varies with the score values of participants to be included. This visualization makes it easy for the meeting organizer to estimate the seating capacity of the meeting place.

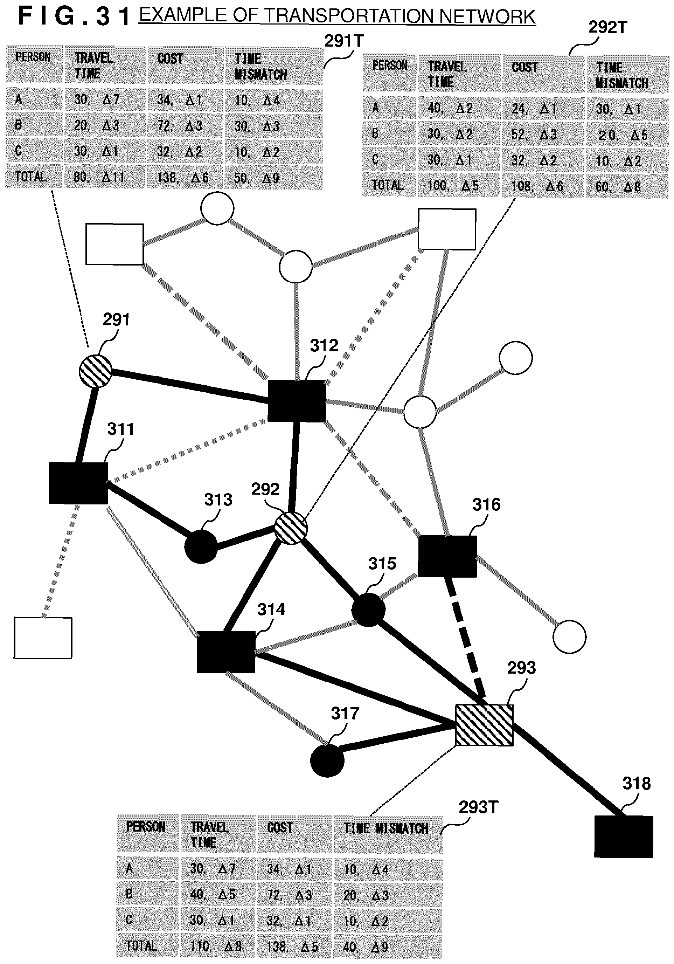

Returning now to the description of a flow depicted in FIG. 20, the recommendation server 10 enumerates nearby points 311 to 318 in the vicinity of each of the meeting candidates 291 to 293 (1904). The nearby points 311 to 318 represent points in the transportation network that are connected to points where the meeting candidates 291 to 293 belong (see FIG. 31).

Next, the recommendation server 10 performs a disutility calculation on the routes from the above-mentioned meeting candidates 291 to 293 to each of the nearby points 311 to 318 (1905). It is assumed in step 1905 that the recommendation server 10 performs the calculation on the basis of a standard disutility function set at the recommendation server without making an inquiry to the meeting participant terminal 12 of each meeting participant. However, the recommendation server 10 may alternatively make a direct inquiry to each meeting participant terminal 12.

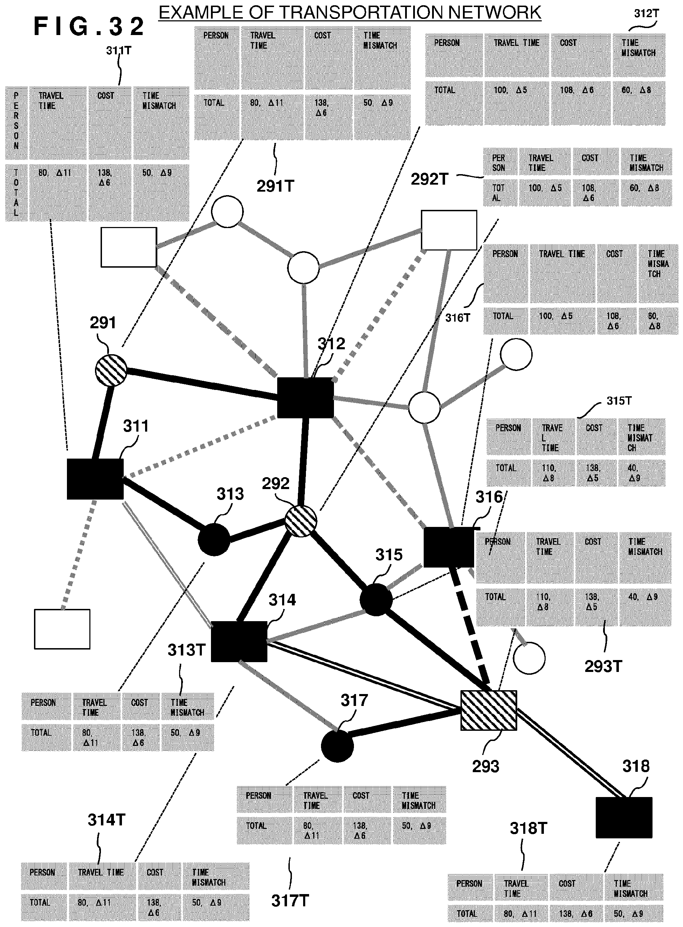

In the transportation network illustrated in FIG. 32, for example, the disutility calculation that is performed on the route from the meeting candidate 291 to the nearby point 311 and related to the travel time is conducted by adding the travel time required for each meeting participant to reach the meeting candidate 291 to the travel time required between the meeting candidate 291 and the nearby point 311.

Further, the disutility calculation that is performed on the route from the meeting candidate 291 to the nearby point 311 and related to the cost is conducted by adding a travel cost required for each meeting participant to reach the meeting candidate 291 to the travel cost required between the meeting candidate 291 and the nearby point 311.

Moreover, the disutility calculation that is performed on the route from the meeting candidate 291 to the nearby point 311 and related to the time mismatch is conducted by adding a time mismatch value obtained for the meeting candidate 291 to the travel time required between the meeting candidate 291 and the nearby point 311.

Subsequently, the results of disutility calculations performed on the nearby points 311 to 318, which are acquired by the recommendation server 10, are illustrated as tables 311T to 318T.

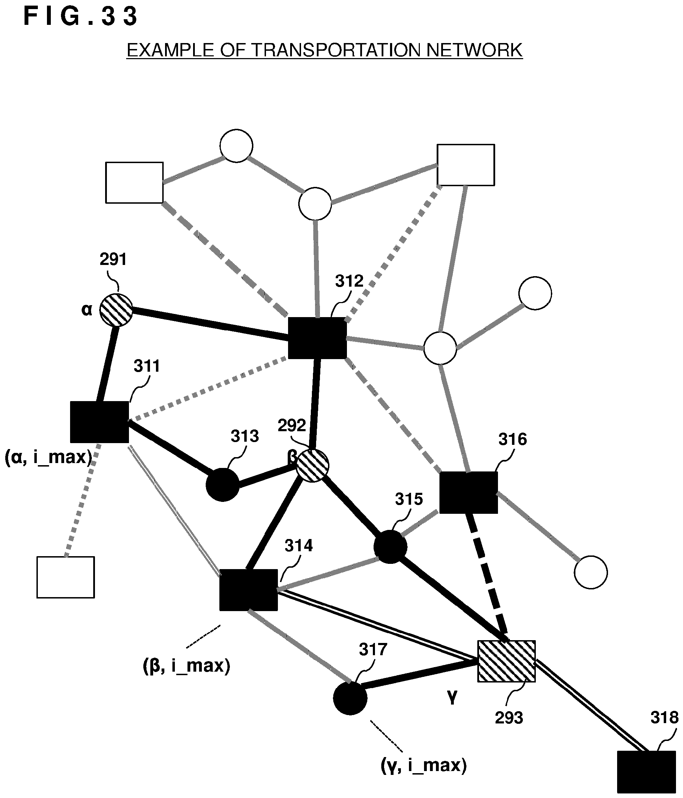

Next, the recommendation server 10 identifies a certain meeting candidate p and a nearby point (p, i_max) that is one of the nearby points (p, i) around the meeting candidate p and maximizes the disutility variation (1906). In the example of FIG. 33, the nearby point 311, which is among the nearby points 311 and 312 around the meeting candidate 291, is identified as the nearby point having the maximum disutility variation, for example. In this case, the values of disutility variation Δ (travel time, cost, and time mismatch) are aggregated for each nearby point, and then the nearby point having the greatest aggregate value is identified as the nearby point having the maximum disutility variation.

Subsequently, the recommendation server 10 excludes a meeting candidate p that satisfies the equation "the disutility of the meeting candidate p - {the disutility caused by traveling from the meeting candidate p to the nearby point (p, i_max) having the maximum disutility variation} > the disutility of a previous meeting candidate q having the minimum disutility" (1907).

Since the accurate location of each meeting participant is not known, it is impossible to determine whether the overall disutility is decreased or increased by traveling from the meeting candidate p to the nearby point (p, i_max) having the maximum disutility variation. However, even if the disutility is decreased, the reason is that it is not a sought solution.

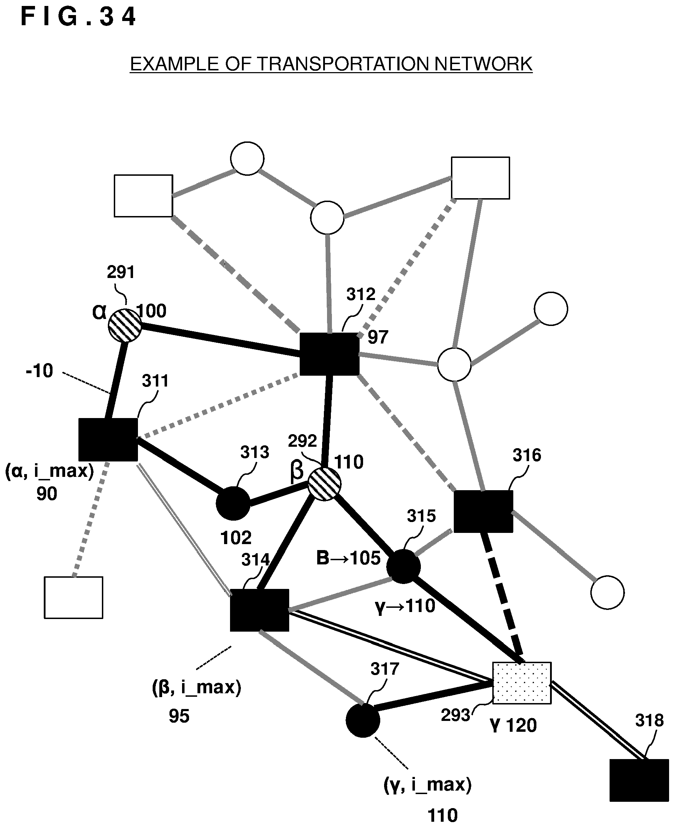

For example, in FIG. 34, when a previous meeting candidate q having the minimum disutility value is assumed to be the meeting candidate 291 (= point α), the above equation is satisfied by the relation between the disutility value 100 of the meeting candidate 291, the disutility value 120 of the meeting candidate 293 (= point γ), and the disutility value 110 of a nearby point 317 having the maximum disutility variation. That is, the meeting candidate 293 is to be excluded from selectable meeting candidates.

The reason is that the disutility value 100 of the meeting candidate 291 is smaller than the value 110 that is obtained by subtracting the difference 10 between the disutility value 120 of the meeting candidate 293 and the disutility value 110 of the nearby point 317 (= (γ, i_max)) having the maximum disutility variation from the disutility value 120 of the meeting candidate 293.

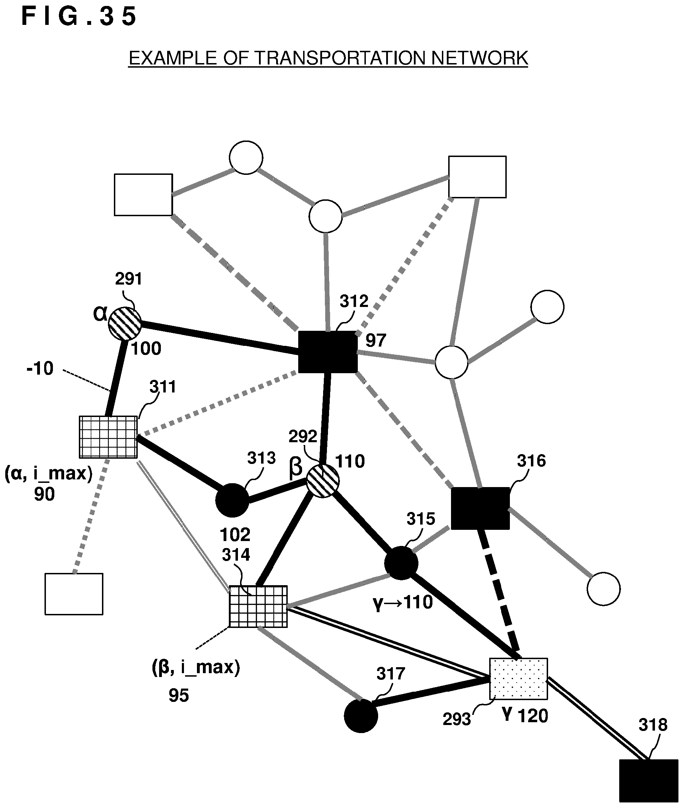

Next, the recommendation server 10 asks a certain meeting candidate r about the disutility of a nearby point (r, j) causing the maximum disutility of the nearby point from the meeting candidate r, from the standpoint of minimizing the Δ disutility of each candidate (for example, the cost) (1908). The example of FIG. 35 assumes that the nearby point 311 for the meeting candidate 291 (point α) and a nearby point 314 for the meeting candidate 292 are asked about.

Subsequently, in a case where the nearby point (r, j), namely, the nearby point 311 or 314, improves a utility aggregation result (in a case where improvement is verified by comparing the disutility inflicted on r and the disutility inflicted on (r, j)), the recommendation server 10 changes the meeting candidate from the meeting candidate r to the nearby point (r, j) (1909) .

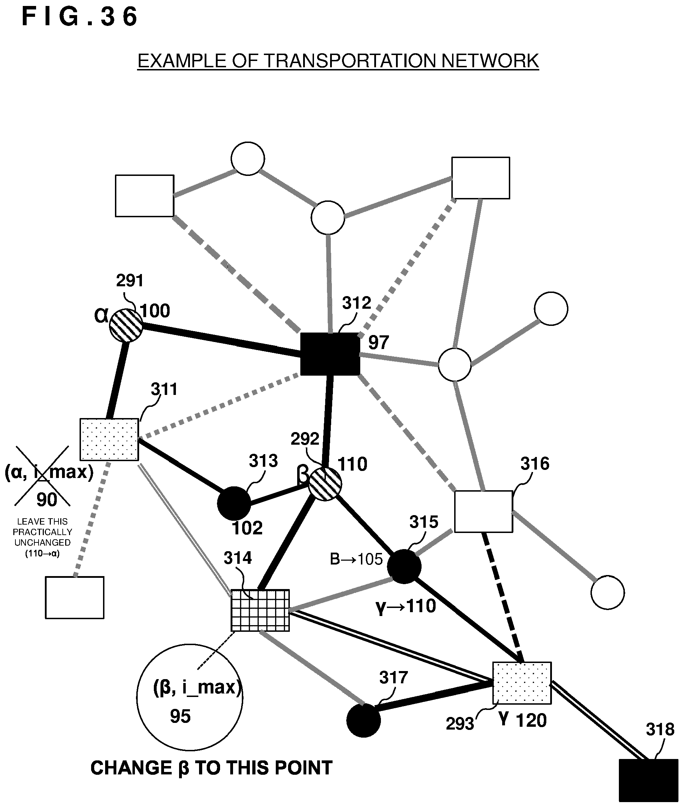

In the example of FIG. 36, the relationship between the meeting candidate 291 and the nearby point 311 remains unchanged. However, as regards the meeting candidate 292 and the nearby point 314, the nearby point 314 is changed to the meeting candidate (point β).

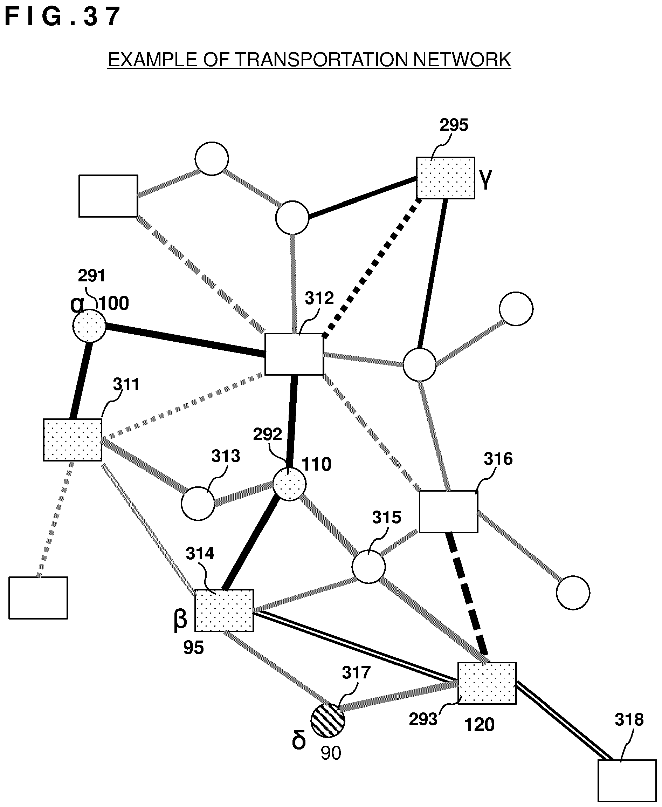

The recommendation server 10 determines whether no further meeting candidate changes are to be made as described above (1910). If it is determined that no further meeting candidate changes are to be made, the recommendation server 10 determines a meeting candidate δ causing the minimum disutility as the meeting place (1912). The example of FIG. 37 indicates a case where the original nearby point 317 is determined as the meeting candidate δ.

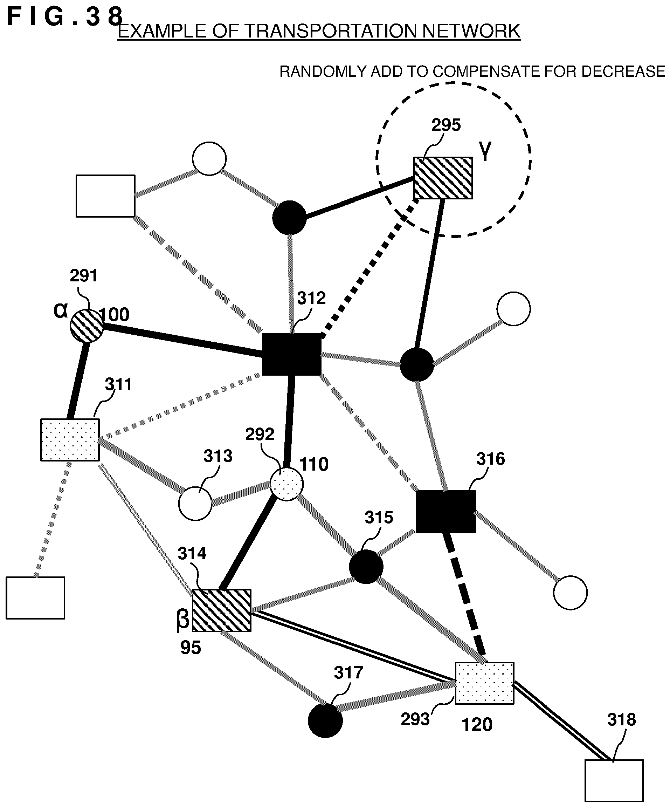

Meanwhile, if it is determined that any further meeting candidate change is to be made, the recommendation server 10 randomly selects new meeting candidates as needed to compensate for a decrease in the number of meeting candidates (1911), and performs a recalculation. The example of FIG. 38 indicates a case where a meeting candidate 295 (point γ) is added.

In the above instance, remembering whether candidate calculations are performed on the meeting candidates eliminates the possibility of re-selecting a meeting candidate that has not been selected as a solution candidate. As a result, solution convergence will be more easily achieved.

Further, the meeting candidates indicative of practically the same places may be grouped together to manage the meeting candidates on an individual group basis (selected as solution candidates, excluded from solution candidates, or unselected) in order to provide improved convergence.

The above-described method enables the meeting time and place recommendation system, which is provided by the present invention, to determine and suggest a meeting time and place to each meeting participant in such a manner as to reduce the waste of travel time without causing unfairness. Further, the above-described method makes it possible to make meeting schedule adjustment while reducing the amount of disclosed private information. Furthermore, the above-described method makes it possible to assist the meeting organizer in preparing for meeting.

Moreover, the description in the present example assumes that the disutility function is to be set at the meeting participant terminal. However, the disutility function may alternatively be set from each of the standpoints (travel time, cost, time mismatch, and the like) or set on an individual plan basis.

In a case where the disutility function is to be set on an individual plan basis, the screen for setting the disutility function should be opened upon clicking on a schedule so as to allow the disutility function related to the associated plan to be set, and the closest plan related to an inquiry about each meeting candidate should be identified to use the disutility function of the identified closest plan.

While the present invention has been described in terms of, for example, a best mode for achieving the present invention, it will be appreciated by persons skilled in the art that the present invention is not limited to the present embodiment described above, and that various variations may be made without departing from the gist of the present invention.

The present embodiment enables each meeting participant to determine a meeting time and place in such a manner as to reduce the waste of travel time without causing unfairness. Further, the present embodiment makes it possible to make meeting schedule adjustment while reducing the amount of disclosed private information, when the meeting schedule is adjusted. Furthermore, the present embodiment makes it possible to assist a meeting organizer in preparing for meeting.

That is, the present embodiment makes it possible to quickly and efficiently calculate a meeting place suitable for all meeting participants while respecting the privacy of each of the meeting participants.

The description in this specification clarifies at least the following. Specifically, when conducting a search on the meeting place, the arithmetic device in the recommendation system according to the present embodiment may calculate the disutility from standpoints of time and cost required for the meeting participant to travel and the mismatch between a meeting time and a participation time estimated by the meeting participant, calculate the variation value of the disutility related to each of the standpoints, and conduct the search on the basis of the results of the calculations with respect to a standpoint that exerts a relatively strong influence on search efficiency.

The above configuration makes it possible to more quickly and efficiently calculate a meeting place suitable for all meeting participants while respecting the privacy of each of the meeting participants.

Further, the arithmetic device in the recommendation system according to the present embodiment may perform a process of acquiring, from the meeting organizer terminal, information on a meeting to be held, assigning a conference ID regarding the meeting, and returning the meeting information including the conference ID to the meeting organizer terminal; a process of assigning a personal ID to a meeting participant when access is made from the meeting participant terminal that has received a meeting guide including the meeting information from the meeting organizer terminal, and returning the personal ID to the meeting participant terminal; and a process of receiving information on the disutility, which includes the personal ID, from the meeting participant terminal, searching for the meeting place, and outputting information on the meeting place to the meeting organizer terminal.

According to the above configuration, the information on disutility inflicted on the meeting participant is not detected by the meeting organizer with identification information or the like as the key. Eventually, it is possible to more quickly and efficiently calculate a meeting place suitable for all meeting participants while giving more respect to the privacy of each of the meeting participants.

Furthermore, the arithmetic device in the recommendation system according to the present embodiment may evaluate the priority given to a meeting by a meeting participant through the use of a predetermined algorithm and estimate the expected number of participants according to the evaluated priority.

The above configuration makes it possible to classify the meeting participants by the strength of intention to attend a meeting and thus estimate the final number of participants. Eventually, it is possible to more quickly and efficiently calculate a meeting place suitable for all meeting participants while respecting the privacy of each of the meeting participants. Additionally, the meeting organizer is enabled to obtain reference information, for example, for making preparations for the meeting, thereby leading to enhancement in efficiency of the entire meeting.

Moreover, the arithmetic device in the recommendation system according to the present embodiment may receive the correspondence between travel time and disutility, which is designated by a meeting participant, from the meeting participant terminal of the meeting participant, estimate a disutility function associated with the travel time according to the designated correspondence, and calculate the disutility variation value per unit change on the basis of the estimated disutility function.

The above configuration makes it possible to conduct an efficient search for a meeting place. Eventually, it is possible to more quickly and efficiently calculate the meeting place suitable for all meeting participants while respecting the privacy of each of the meeting participants.

Further, the arithmetic device in the recommendation system according to the present embodiment may receive, from the meeting participant terminal, the correspondence between disutility and a time zone including a meeting time and a time period before and after the meeting time, which is designated by the corresponding meeting participant, estimate a disutility function associated with a meeting time mismatch according to the designated correspondence, and calculate the disutility variation value per unit change on the basis of the estimated disutility function.

The above configuration makes it possible to conduct an efficient search for a meeting place. Eventually, it is possible to more quickly and efficiently calculate the meeting place suitable for all meeting participants while respecting the privacy of each of the meeting participants.

Moreover, the arithmetic device in the recommendation system according to the present embodiment may receive, from the meeting participant terminal, the correspondence between disutility and a cost required for meeting participation, which is designated by the corresponding meeting participant, estimate a disutility function according to the designated correspondence, and calculate the disutility variation value per unit change on the basis of the estimated disutility function.

The above configuration makes it possible to conduct an efficient search for a meeting place. Eventually, it is possible to more quickly and efficiently calculate the meeting place suitable for all meeting participants while respecting the privacy of each of the meeting participants.

### Description of Reference Numerals

- 1:: Recommendation system
- 5:: Network
- 10:: Recommendation server
- 101:: Program group
- 102:: Conference ID assignment program
- 103:: Personal ID assignment program
- 104:: Meeting candidate selection program
- 105:: Candidate convergence determination program
- 106:: Final plan information creation program
- 107:: Data
- 108:: Data on evaluation result
- 109:: Data on evaluation result aggregation result
- 110:: Data on number of participants
- 111:: Data on transportation network
- 112:: Data on meeting place
- 113:: Recommendation server management function
- 11:: Meeting organizer terminal
- 120:: Meeting management function
- 121:: Program group
- 122:: Meeting guide creation program
- 123:: Evaluation confirmation program
- 12:: Meeting participant terminal
- 130:: Participation management function
- 131:: Program group
- 132:: Site access program
- 133:: Disutility evaluation program
- 134:: Disutility function management program
- 135:: Disutility function data
- 200:: Computer
- 201:: Auxiliary storage device
- 202:: Program
- 203:: Main storage device
- 207:: Communication device
- 208:: Arithmetic device
- 209:: Input device
- 210:: Output device

## Claims

1. A recommendation system comprising:
a communication device that communicates with terminals through a network; and
an arithmetic device that performs
a process of distributing, to the terminals of meeting participants through the communication device, meeting candidate information including meeting conditions indicative of time and place for holding a meeting,
a process of receiving, from the terminals, information on disutility that is inflicted on the meeting participants by the meeting conditions indicated by the meeting candidate information, and
a process of searching the places indicated by the meeting candidate information according to a disutility value for the meeting conditions and a disutility variation value per unit change in the meeting conditions in order to retrieve a meeting place that relatively reduces the disutility inflicted on all the meeting participants, and outputting the retrieved meeting place to the terminals, the disutility value and the disutility variation value being indicated by the information on disutility.

2. The recommendation system according to claim 1,
wherein the arithmetic device
calculates the disutility from standpoints of time and cost required for the meeting participants to travel and mismatch between a meeting time and a participation time estimated by the meeting participants,
calculates the variation value of the disutility related to each of the standpoints, and
conducts the search on a basis of the results of the calculations with respect to a standpoint that exerts a relatively strong influence on search efficiency, when searching for the meeting place.

3. The recommendation system according to claim 1,
wherein the arithmetic device performs
a process of acquiring, from a meeting organizer terminal, information on a meeting to be held, assigning a conference ID regarding the meeting, and returning meeting information including the conference ID to the meeting organizer terminal,
a process of assigning a personal ID to a meeting participant when access is made from a meeting participant terminal of the meeting participant that has received a meeting guide including the meeting information from the meeting organizer terminal, and returning the personal ID to the meeting participant terminal, and
a process of receiving information on the disutility including the personal ID from the meeting participant terminal, searching for the meeting place, and outputting information on the meeting place to the meeting organizer terminal.

4. The recommendation system according to claim 1, wherein the arithmetic device
evaluates a priority given to a meeting by the meeting participant through use of a predetermined algorithm, and
estimates an expected number of participants according to the evaluated priority.

5. The recommendation system according to claim 1, wherein the arithmetic device
receives, from the terminal of a meeting participant, the correspondence between travel time and disutility that is designated by the meeting participant,
estimates a disutility function associated with the travel time according to the designated correspondence, and
calculates the disutility variation value per unit change on a basis of the estimated disutility function.

6. The recommendation system according to claim 1, wherein the arithmetic device
receives, from the meeting participant terminal, the correspondence between disutility and a time zone including a meeting time and a time period before and after the meeting time that is designated by the meeting participant,
estimates a disutility function associated with a meeting time mismatch according to the designated correspondence, and
calculates the disutility variation value per unit change on the basis of the estimated disutility function.

7. The recommendation system according to claim 1, wherein the arithmetic device
receives, from the meeting participant terminal, the correspondence between disutility and a cost required for meeting participation that is designated by the meeting participant,
estimates the disutility function according to the designated correspondence, and
calculates the disutility variation value per unit change on the basis of the estimated disutility function.

8. A recommendation method that is adopted by an information processing system including a communication device configured to communicate with terminals through a network, the recommendation method comprising:
performing a process of distributing, to the terminals of meeting participants through the communication device, meeting candidate information including meeting conditions indicative of time and place for holding a meeting;
performing a process of receiving, from the terminals, information on disutility that is inflicted on the meeting participants by the meeting conditions indicated by the meeting candidate information; and
performing a process of searching the places indicated by the meeting candidate information according to a disutility value for the meeting conditions and a disutility variation value per unit change in the meeting conditions in order to retrieve a meeting place that relatively reduces the disutility inflicted on all the meeting participants, and outputting the retrieved meeting place to the terminals, the disutility value and the disutility variation value being indicated by the information on disutility.
